# EUROPEAN PATENT APPLICATION

(11) **EP 2 200 145 A1**
(43) Date of publication of application: **23.06.2010**
(21) Application number: 08830025.6
(22) Date of filing: 10.09.2008
(51) Int. Cl.: H02J 7/00, B25F 5/00, H01M 10/44, H02J 7/02

(54) **BATTERY PACK**

(30) Priority: 13.09.2007 JP 2007237583
(71) Applicant: Sakakibara, Kazuyuki, Aichi 444-0802 (JP)
(72) Inventor: Sakakibara, Kazuyuki, Aichi 444-0802 (JP)
(74) Representative: Appelt, Christian W.
(86) International application number: PCT/JP2008/066334
(87) International publication number: WO 2009/035000

(57) **Abstract**

A cordless power tool system is provided which is driven by using a battery pack as a power source, and which has work performance equivalent to an AC power tool is driven by using a commercial power source as a power source. The cordless power tool system is configured to include: a battery pack (100) in which DC voltage of battery modules (112) is converted into AC voltage, to thereby output the AC voltage having a level which is comparable to that of the commercial power source; a cordless power tool which is driven by using the battery pack as a power source; an electrical cord adapter which allows power supply from the commercial power source to the battery pack for charging the battery pack; and an electrical cord adapter which allows power supply from the commercial power source to the cordless power tool for driving the cordless power tool.

## Description

### Technical Field

The present invention relates to battery packs which are constructed with rechargeable batteries such as Li-ion batteries.

### Background Art

Conventionally, a cordless power tool (see Japanese Patent Application Publication No. 2002-254355, for example) operates, such that a battery pack is charged via a charger with electricity which is supplied from a commercial power source, and such that a DC motor is driven using the battery pack as a power source. Alternatively, an AC power tool operates, such that an electrical cord thereof is electrically connected with the commercial power source and, such that an AC motor is driven with electricity which is supplied from the commercial power source.

In recent years, technologies such as battery technologies or charge control process technologies have advanced to provide improvements in performance of battery packs for use in cordless power tools. Notably, Li-ion battery packs are used by an increasing number of people, in which increased energy density of these battery packs makes it ease to achieve reduced weight, increased voltage, and increased capacity, relative to battery packs using NiCd batteries or NiMH batteries.

### Disclosure of Invention

For conventional technologies, a 14.4V cordless power tool system combined with a 14.4V Li-ion battery pack, a 36V cordless power tool system combined with 36V Li-ion battery pack and an AC power tool will be described respectively in a comparative manner below.

As major demands from users of cordless power tools, high workability and cost reduction are focused on. The "high workability" means: (a) weight reduction of a battery pack for reduction in user's workload; (b) an increase in power output of the cordless power tool to that of an AC power tool; (c) extension of run time of the cordless power tool which starts after one full charge cycle of the battery pack; and (d) potential operability of the cordless power tool as a corded power tool such as an AC power tool, for a need for continued run time longer than the above-described run time. On the other hand, the "cost reduction" means: (a) reduction in initial cost for both the battery pack and its charger; and (b) reduction in running cost by virtue of extended life time of the battery pack.

Conventional systems including 14.4V cordless power tool systems and 36V cordless power tool systems, however, cannot satisfy all of the user demands, because these systems have been specialized to have a system design that can satisfy only part of the user demands.

For the 14.4V cordless power tool system, the system design has been specialized to offer advantages, i.e., (a) a reduction in weight of the battery pack to an extent to which the user can physically perceive it light, with resulting satisfaction; (b) a reduction in run time of the tool system which starts after one full charge cycle of the battery pack, to an extent to which the user can feel that, when working under light loaded conditions, the run time is adequate, with resulting satisfaction; and, (c) a reduction in initial cost of the tool system by constructing the battery pack and its charger to have a low capacity of electrical power, relative to that of the 36V cordless power tool.

For the above reasons, the 14.4V cordless power tool system is poor in the power output performance and the run time which starts after one full charge cycle of the battery pack when working under heavy loaded conditions, relative to the 36V cordless power tool system.

For the 36V cordless power tool system, the system design has been specialized to offer advantages, i.e., (a) outperformed power output performance and reduced run time starting after one full charge cycle of the battery pack; and (b) a reduction in running cost resulting from elongation of life cycle of battery cells which is provided by a reduction in a current in the load, both relative to the 14.4V cordless power tool system.

For these reasons, the 36V cordless power tool system has a battery pack having a maximum weight below which the user feels it possible to carry the 36V cordless power tool system, and the 36V cordless power tool system requires high initial cost because the battery pack and its charger are built up to have relatively high capacity of electric power.

In addition, even the 36V cordless power tool cannot overtake any an AC power tool, in terms of power output. For this reason, the user is forced to do work using the 36V cordless power tool with poor work efficiency, in work sites where the user cannot tap the commercial power source with ease, showing incapability of continuously using such a conventional cordless power tool during a whole work process, which causes the conventional cordless power tool to be a temporally and alternatively used tool.

Moreover, a battery pack stores electric power with limited capacity, resulting in a limited length of run time staring after one full charge cycle of the battery pack. For this reason, the user cannot use a power tool combined with such a battery pack without any breaks, unlike an AC power tool. For this reason, there is an exemplary conventional cordless power tool which can act temporally as a corded DC power tool when used in electrical connection with an AC-DC converter device, for allowing the user to do continuous work.

Indeed the cordless power tool allows the user to do continuous work when used in electrical connection with an AC-DC converter device, but this tool is low in power output performance because of its low drive voltage relative to that of the commercial power source, requiring additional cost for circuitry for preventing the AC-DC converter device from being heated, with incapability of enduring heavy loaded work because of prevention of circuitry from large load-current application.

From the foregoing, it is evident that there is no cordless power tool system which is highly evaluated because of a good balance between the weight, the level of power output, the length of run time, initial cost and running cost, all of a battery pack.

With respect to power output performance in particular, a conventionally existing battery pack for use in cordless power tools has a maximum voltage of 36V, with a large difference in power output performance from the commercial power source which has a voltage of 100V. Due to this, there is no cordless power tool which can output power at a level which is comparable to that of an AC power tool, and there is no battery pack which can output power at a level which is comparable to that of the commercial power source, to say nothing of the fact that there is no battery pack of a type that can output voltage exceeding 36V, while satisfying all the user's demands as described above.

To raise output voltage of a cordless power tool above 36V, a conventional cordless power tool can be modified to use a high DC voltage battery pack which shares an underlying configuration with a conventional battery pack, but which has more battery cells interconnected in series. The modified cordless power tool, however, may present an additional drawback. For example, due to the use of high DC voltage, arc may reside between contacts of a switch in the cordless power tool after the switch is turned off by disconnection between the contacts of the switch, which can cause a switch failure.

There is an alternative approach to eliminate the drawback caused by the use of high DC voltage, in which AC voltage is produced by boosting up the total voltage of a group of battery cells in series, and by converting the boosted voltage into the AC voltage. This approach, however, would increase load current of the battery cells, resulting in undesirable heat generation in the battery cells and a booster circuit. The larger a difference between the DC voltage of the battery cell group and the effective value of the AC voltage at a final output stage, the more steeply the above-described heat generation increases.

On the other hand, incorporation of a device for eliminating or reducing the heat generation into a battery pack would cause a still additional drawback, for example, that the battery pack requires a large increase in size and cost, relative to a battery pack for use in a conventional cordless power tool.

Under the circumstances described above, an invention has been created, according to a first aspect of which, a battery pack usable as a power source for an electric device is provided, the battery pack comprising:
a battery cell group in the form of a plurality of battery cells electrically interconnected in series;
a discharge control circuitry configured to control discharging of the battery cell group;
discharge output terminals through which electric output of the discharge control circuitry is supplied to the electric device; and
a casing that houses the battery cell group, the discharge control circuitry and the discharge output terminals,
wherein the battery cell group constitutes a battery module, in combination with input/output terminals electrically connected with the battery cell group,
each battery module is electrically connected with at least one other battery module in series, to thereby constitute a battery module group,
the battery module group is electrically connected with the discharge control circuitry, and
the battery cell modules contain module control circuitry,
each module control circuitry comprising:
   a first detector configured to detect at least one of a voltage level, a current level and a temperature level, for at least one of a plurality of battery cells within the battery cell group; and
   a first selector configured to select one of a state for allowing outputting of a direct current voltage to the input/output terminals, and a state for interrupting the outputting, based on a detection result from the first detector,
   wherein the discharge control circuitry is further configured to transmit a first signal to the module control circuitry, when the discharge control circuitry interrupts outputting of a selected one of direct current voltage and alternating current voltage to the discharge output terminals, the first signal being indicative of interruption of the outputting,
   each module control circuitry is configured to transmit a second signal to the discharge control circuitry, when the module control circuitry interrupts the outputting of the direct current voltage to the input/output terminals, the second signal being indicative of interruption of the outputting,
   the discharge control circuitry is still further configured to interrupt the outputting of the selected one of direct current voltage and alternating current voltage to the discharge output terminals, in response to reception of the second signal from the module control circuitry which is provided to at least one of a plurality of battery modules within the battery module group, and
   each module control circuitry is still further configured to interrupt the outputting of the direct current voltage to the input/output terminals, in response to reception of the first signal from the discharge control circuitry.

This battery pack would allow, after interruption of discharging the battery cells, the module control circuitry and the discharge control circuitry to electrically insulate the battery cells from each other or one another, with improved reliability in the electrical insulation, while the battery cells are not discharged.

According to a second aspect of the invention, a battery pack usable as a power source for an electric device is provided, the battery pack comprising:
a battery cell group in the form of a plurality of battery cells electrically interconnected in series;
conversion circuitry configured to convert alternating current voltage of a common power source to direct current voltage;
charge control circuitry configured to control the direct current voltage;
charging terminals through which electricity is supplied from the common power source to the battery cell group; and
a casing that houses the battery cell group, the conversion circuitry, the charge control circuitry and the charging terminals,
wherein the battery cell group constitutes a battery module, in combination with input/output terminals electrically connected with the battery cell group,
the battery module is electrically connected with at least one other battery module in series, to thereby constitute a battery module group,
the battery module group is electrically connected with the charge control circuitry, and
the battery cell modules each contain module control circuitry,
the module control circuitry comprising:
   a third detector configured to detect at least one of a voltage level, a current level and a temperature level, for at least one of a plurality of battery cells within the battery cell group; and
   a third selector configured to select one of a state for allowing inputting of the direct current voltage to the battery cell group, and a state for interrupting the inputting, based on a detection result from the third detector,
   wherein the charge control circuitry is further configured to transmit a third signal to the module control circuitry, when the charge control circuitry interrupts inputting of the direct current voltage to the battery module group, the third signal being indicative of interruption of the inputting,
   the module control circuitry is configured to transmit a fourth signal to the charge control circuitry, when the module control circuitry interrupts the inputting of the direct current voltage to the battery cell group, the fourth signal being indicative of interruption of the inputting,
   the charge control circuitry is still further configured to interrupt the inputting of the direct current voltage to the battery module group, in response to reception of the fourth signal from the module control circuitry which is provided to at least one of a plurality of battery modules within the battery module group, and
   the module control circuitry is still further configured to interrupt the inputting of the direct current voltage to the battery cell group, in response to reception of the third signal from the charge control circuitry.

This battery pack would allow both the module control circuitry and the charge control circuitry to protect in duplicate the battery cells from being abnormally charged, with improved reliability in the charge control.

According to another aspect of the invention, a battery pack usable as a power source for an electric device is provided, the battery pack comprising: (a) a battery cell group in which a plurality of battery cells are electrically interconnected in series; (b) discharge control circuitry configured to convert direct current voltage of the battery cell group into alternating current voltage; (c) alternating current output terminals through which output of the discharge control circuitry is supplied to the electrical device; and (d) a casing that houses the battery cell group, the discharge control circuitry and the alternating current output terminals.

In one implementation of the invention, an approach is employed of converting a DC voltage of a group of two or more serially-connected battery cells into an AC voltage.

For this approach to be implemented, if a conventional technique is applied in which a casing is used to house: a battery cell group in which a plurality of battery cells are serially-connected; voltage monitor wires electrically connected with the battery cells of the battery cell group; a control section electrically connected with the voltage monitor wires; and discharging terminals electrically connected with the control section, then, due to very high voltage of the battery cell group, many locations within the battery pack become higher in potential, such as locations between the battery cells having mutually different voltages, locations between the voltage monitor wires, space between the voltage monitor wires and the battery cells, and locations between the discharging terminals having opposite polarities , to thereby invite additional drawbacks with regard to electrical insulation, such as the complexity of the interior structure of the battery pack for ensured electrical insulation, and the dielectric breakdown due to introduction of foreign matters.

In addition, a conventional charger charges a battery pack by conversion of the commercial power source voltage into a DC voltage and by DC voltage reduction for isolation. For the conventional charger in combination with the battery pack, duplicate protection is provided in which, if the charger is failed when charging the battery pack, then the battery pack itself stops the charging, and, if the battery pack is failed when being charged, then the charger itself stops the charging.

In an implementation of the invention, the battery pack is used, which has the battery cell group configured to be effective in solving the aforementioned insulation-related problems, without requiring voltage reduction for isolation which is typically implemented in a conventional charger. This makes it possible to incorporate a simplified DC converter into the battery pack, and to charge the battery pack with the commercial power source in electrical connection with each other via only their electrical cord.

In this case, however, the commercial power source side cannot be controlled from the battery pack side, and therefore, if the battery pack side is failed when being charged, then the charging cannot be stopped, with an additional need for duplicate protection.

In one implementation of the invention, a power tool system is configured to include: (a) a battery pack configured to output alternating current voltage which is higher that 36 V, particularly equivalent to a commercial power source; (b) a cordless power tool to be operated in electrical connection with the battery pack; (c) an electrical cord allowing the battery pack to be connected with the commercial power source, for charging the battery pack; (d) a power source cord adaptor allowing the battery pack to be connected with the commercial power source, for charging the battery pack; and (e) a power source cord adaptor allowing the cordless battery pack to be connected with the commercial power source, for continuous supply of electrical power from the commercial power source to the cordless power tool.

It is added that load devices contemplated here to which a battery pack according to the present invention discharges include, but not limited in type to power tools, a wide variety of electric devices which can be used similarly with implementations of the present invention, and it does not matter whether the load devices contemplated here are powered by a DC or an AC.

A battery pack according to an exemplary embodiment of the present invention is constructed to include: a battery cell group in which battery cells are serially interconnected and which has a total output voltage of above 36 V; discharge control circuitry for converting a DC voltage of the battery cell group into an AC voltage; and AC-output terminals for supplying the output of the discharge control circuitry to a power tool, with the components accommodated within a common case. This improves the durability of a switch of the power tool under high voltage conditions, while providing an output voltage of above 36 V.

In addition, if the AC voltage of the battery pack has its effective value which is selected so as to include the same as the effective value of the commercial power source voltage, and if the AC voltage of the battery pack has its frequency which is selected so as to include the same as the frequency of the commercial power source, then the electricity which is comparable to that of the commercial power source can be supplied to a cordless power tool according to an exemplary embodiment of the present invention, which would satisfy needs for improved output, runtime, initial cost and running cost.

Additionally, if the AC-output terminals described above is made insertable into an outlet plug of an AC power tool for electricity input, then the AC power tool will become available, which solves a problem that a conventional cordless power tool, which is short of output power, can be used only for temporarily uses.

A battery pack according to an exemplary embodiment of the present invention is configured to include a connect/disconnect device disposed between battery cells in a battery cell group, wherein the connect/disconnect device becomes a connect state when discharge control circuitry is in an output state. This would provide the very-high-voltage battery cell group with its required electrical isolation or separation.

A battery pack according to an exemplary embodiment of the present invention is constructed to include: a battery cell group in which battery cells are serially interconnected, whose number is smaller than a total number of the battery cells within the battery pack; battery module control circuitry for controlling a DC voltage of the battery cell group; a battery module which is housed within an outer enclosure such that the battery module is exposed only at input-output terminals which are electrically connected with the module control circuitry are exposed to an outside; and a case which houses the components. A plurality of battery modules are electrically interconnected in series into a battery module group, which is electrically connected with the discharge control circuitry. This battery pack would improve the complexity of the interior structure of the battery pack and would satisfy a need for electrical isolation or separation in the battery pack.

In addition, the battery module has module control circuitry, which has a detector configured to detect at least one of a voltage level, a temperature level and a current level, for the battery cells, and a device for selectively outputting a DC voltage of the battery cell group to the input-output terminals and to block the stopping, based on a detection result from the detector. This battery pack would improve the complexity of the interior structure of the battery pack and would satisfy a need for electrical isolation or separation in the battery pack.

The discharge control circuitry and the module control circuitry communicate with each other, and, if the discharge control circuitry stops outputting, then a signal indicating that the outputting is stopped is sent from the discharge control circuitry to the module control circuitry, and alternatively, if the module control circuitry stops outputting, then a signal indicating that the outputting is stopped is sent from the module control circuitry to the discharge control circuitry. The configuration of the discharge control circuitry to stop its outputting in response to reception of the stop signal, and the configuration of the module control circuitry to stop its outputting in response to reception of the stop signal improve the complexity of the interior structure of the battery pack and satisfy a need for electrical isolation or separation in the battery pack.

In addition, if the discharge control circuitry is configured to include a detector configured to detect at least one of a voltage level, a temperature level and a current level, for each of the battery modules within the battery module group, and a device for selectively outputting an AC voltage to AC-output terminals and to block the outputting, based on a detection result from the detector. This battery pack would improve the complexity of the interior structure of the battery pack and would satisfy a need for electrical isolation or separation in the battery pack.

A battery pack according to an exemplary embodiment of the present invention is configured to include a detector configured to detect entry into an electrical connection state in which an outlet plug that is power-input terminals of an AC power tool, is connected to AC output terminals, and discharge control circuitry which is configured to selectively output an AC voltage to the AC output terminals and to block the outputting, based on a detection result from the detector, which would satisfy a need for electrical isolation or separation in the battery pack.

Furthermore, the detector, which is configured to detect entry into an electrical connection state in which the outlet plug is connected to the AC output terminals, may be in the form of a cover which is movable integrally with the insertion movement of the outlet plug, and a switch which is changeable in state with the movement of the cover, which would satisfy a need for electrical isolation or separation in the battery pack.

A battery pack according to an exemplary embodiment of the present invention has charging terminals, and charge control circuitry which is configured to convert an input voltage from a commercial power source through the charging terminals, into a DC voltage and to control the DC voltage, which allows the battery pack to be charged by connecting an electrical cord with the charging terminals, without requiring use of any charger. This satisfies a need for improved initial cost.

In addition, the module control circuitry may include a detector configured to detect at least one of a voltage level, a temperature level, and a current level, for the battery cells, and a device for selectively inputting a DC voltage the battery cell group and to block the stopping, based on a detection result from the detector, which would satisfy a need for duplicate protection during charging.

The charge control circuitry and the module control circuitry communicate with each other, and, if the charge control circuitry stops charging, then a signal indicating that the charging is stopped is sent from the charge control circuitry to the module control circuitry, and alternatively, if the module control circuitry stops charging, then a signal indicating that the charging is stopped is sent from the module control circuitry to the charge control circuitry. The configuration of the charge control circuitry to stop its outputting in response to reception of the stop signal, and the configuration of the module control circuitry to stop its outputting in response to reception of the stop signal satisfy a need for duplicate protection during charging.

The charge control circuitry may have a detector configured to detect at least one of a voltage level, a temperature level and a current level, for each of the battery modules within the battery module group, and a device for selectively inputting a DC voltage to the battery module group and blocking, based on a detection result from the detector, which satisfy a need for duplicate protection during charging.

The charge control circuitry may have a detector configured to detect entry into an electrical connection in which power-supply terminals that delivers electricity from outside of the battery pack, is connected to the charging terminals, and a device for selectively inputting a DC voltage to the battery module group and blocking, based on a detection result from the detector, which would satisfy a need for electrical isolation or separation in the battery pack.

A battery cell in the battery pack according to an exemplary embodiment of the present invention may be a Li-ion battery, in particular, which would satisfy a need for improved weight, output, runtime, initial cost and running cost, of a cordless power tool according to an exemplary embodiment of the present invention, generally and effectively.

An electrical cord adapter according to an exemplary embodiment of the present invention includes a case in which a guide is formed for attachment to a battery pack according to an exemplary embodiment of the present invention; power-supply terminals which are electrically connected with charging terminals of the battery pack; and an electrical cord through which an AC voltage is supplied from the commercial power source to the power-supply terminals. The battery pack can be charged by connecting the battery pack to the electrical cord adapter, without requiring use of any charger, which would satisfy a need for improved initial cost.

An electrical cord adapter may include a guide for attachment to a cordless power tool according to an exemplary embodiment of the present invention, and power-supply terminals through which an AC voltage is supplied from the commercial power source to power-input terminals of the cordless power tool, which would satisfy a need for improved runtime and initial cost, and an electrical cord adapter may be configured to be attachable to any one of a battery pack according to an exemplary embodiment of the present invention and a cordless power tool according to an exemplary embodiment of the present invention, which would satisfy a need for improved initial cost.

According to another aspect of the present invention, a battery pack is provided which comprises: a battery module having a battery cell group in which a plurality of battery cells are electrically interconnected in series; discharge control circuitry configured to control discharge of the battery cell group; discharge output terminals through which output of the discharge control circuitry is supplied to an electric device; and a common case which houses the components, wherein the battery pack outputs a voltage of 36 V or higher through the discharge output terminals.

According to still another aspect of the present invention, a battery pack is provided which comprises: a battery module having a battery cell group in which plurality of battery cells are electrically interconnected in series; discharge control circuitry configured to control discharge of the battery cell group; discharge output terminals through which output of the discharge control circuitry is supplied to an electric device; and a common casing which houses the components, wherein the battery pack outputs a voltage of 100 V or higher through the discharge output terminals.

According to additional aspect of the present invention, a battery pack is provided which comprises: a battery module having a battery cell group in which a plurality of battery cells are electrically interconnected in series; discharge control circuitry configured to control discharge of the battery cell group; discharge output terminals through which output of the discharge control circuitry is supplied to an electric device; and a common case which houses the components, wherein each battery cell is generally cylindrical, has a diameter in a range between approximately 16 mm and approximately 18 mm, and has a height in a range between approximately 20 mm and approximately 30 mm.

There will be first described advantageous effects of an exemplary embodiment of the present invention, with respect to output performance. A cordless power tool according to an exemplary embodiment of the present invention operates such that a battery pack supplies to an AC motor an AC voltage of above 36 V, which is such as 48V, 72V or 100V, Therefore, as the output level of a cordless power tool according to an exemplary embodiment of the present invention becomes closer to the same as the commercial power source, such a cordless power tool can show increasing differences in output level from a conventional cordless power tool powered by a voltage of 14.4V or 36V.

A battery cell within a battery pack has the internal resistance, and, during discharge, consumes energy whose amount varies proportional to the square of the loading current value of the battery cell, in the form of heat emission from the battery cell. In a cordless power tool according to an exemplary embodiment of the present invention, the loading current of the cordless power tool, particularly when the toll is powered by the same as a voltage of the commercial power source, remarkably small in comparison with the loading current in a conventional cordless power tool powered by a voltage of 14.4 V or 36 V. Therefore, in a battery pack according to an exemplary embodiment of the present invention, the energy which is consumed in the form of heat emission is minor in comparison with a conventional battery pack having an output voltage of 14.4 V or 36 V.

In addition, in a battery pack according to an exemplary embodiment of the present invention, because the battery pack outputs an AC voltage having a level which is the same as the effective value of the commercial power source, discharge output terminals can be provided which are connectable with an outlet plug for use with the commercial power source. Therefore, the battery pack can be used to power even a conventional AC power tool, with its electrical cord connected with the battery pack. This battery pack would provide an effect that the battery pack can be used in an environment where a user owns and uses various types of AC power tools for various kinds of work, with the battery pack acting as a simplified auxiliary power source when the use finds it difficult to utilize the commercial power source, with an additional effect that the battery pack does not require the user to temporarily use a conventional cordless power tool which outputs power at an unsatisfactory level, for utilization of the commercial power source, which provides improved ease-to-use of power tools.

There will be described next effects of an exemplary embodiment of the present invention, with respect to a runtime. In a cordless power tool according to an exemplary embodiment of the present invention, the loading current is so remarkably small that energy which is consumed in the form of heat emission is small, in comparison with a conventional cordless power tool, with increased efficiency of power supply from the battery pack to the motor.

Therefore, in a battery pack according to an exemplary embodiment of the present invention, the loading current required to be supplied can be reduced, such that the reduced loading current is smaller than that of a conventional battery pack, by down to the reciprocal of an output voltage ratio between the battery pack according to the invention and the conventional battery pack. That is, in a battery pack according to an exemplary embodiment of the present invention, the amount of electricity required to be supplied to the motor can be reduced relative to when a conventional battery back is used for machining the same workpiece. As a result, in a battery pack according to an exemplary embodiment of the present invention, even if the battery cell capacity is selected to be smaller than that of a conventional battery pack, by down to the reciprocal of the output voltage ratio with the conventional battery pack, the runtime can be long enough to satisfy the user.

In addition, when a required runtime exceeds a runtime which can be provided by a fully-charged battery pack, and subsequent work is needed without interruption, electrical connection of a cordless power tool according to an exemplary embodiment of the present invention with an electrical cord adapter according to an exemplary embodiment of the present invention would enable continuous work, with the cordless power tool acting as a corded AC power tool. Because the AC motor, which is powered by electricity which is directly supplied from the commercial power source, is used, a whole AC-DC converter in a conventional system can be eliminated, which would satisfy a need about an AC-DC converter.

There will be next described effects of an exemplary embodiment of the present invention, with respect to the weight of a battery pack. Even if a cordless power tool according to an exemplary embodiment of the present invention, is used with a battery pack having an electricity capacity smaller than that of a battery pack used with a conventional cordless power tool, the output power and the runtime of the battery pack will satisfy a user. The weight of the battery pack principally depends on the total amount of electricity of a battery cell group disposed within the battery pack.

Therefore, this battery pack would provide effects, with respect to the weight, that the battery pack is light enough to satisfy a user.

There will be next described effects of an exemplary embodiment of the present invention, with respect to an initial cost. Even if a cordless power tool according to an exemplary embodiment of the present invention, is used with a battery pack having an electricity capacity smaller than that of a battery pack used with a conventional cordless power tool, the output power, the runtime and the weight of the battery pack will satisfy a user. The initial cost of the battery pack principally depends on the cost of a battery cell group disposed within the battery pack, which cost principally depends on the total electricity capacity of the battery cell group.

Therefore, this cordless power tool system would provide an effect that the battery pack can have a total electricity capacity smaller than that of a battery pack for use in a conventional cordless power tool, with an additional effect that, because of unnecessity for a charger for charging the battery pack, this system can contribute to initial cost reduction.

There will be next described effects of an exemplary embodiment of the present invention, with respect to a running cost. A cordless power tool according to an exemplary embodiment of the present invention, can be used with a battery pack having an electricity capacity smaller than that of a battery pack used with a conventional cordless power tool, and therefore, the amount of electricity which needs to be supplied from the commercial power source to the battery pack can be relatively small. In addition, because of a reduction in the loading current of the battery pack, progress of aging such as electrode corrosion in battery cells is suppressed without using any complex charge control technique or the like, resulting in the extended life time of the battery pack.

As a result, this cordless power tool system provides an effect that the cost for consuming power from the commercial power source is reduced because of a reduced amount of electricity supplied from the commercial power source, and an additional effect that the running cost is reduced because a replacement cycle in which a used battery pack is replaced with a new battery pack is elongated owing to the extended life time of the battery pack.

There will be next described effects of an exemplary embodiment of the present invention, with respect to electrical isolation or separation in a battery pack. A battery pack according to an exemplary embodiment of the present invention has a connect/disconnect device for selectively interrupting current flow between battery cells within a battery cell group, and the connect/disconnect device permits the current flow when discharge control circuitry is in an output state. That is, when the discharge control circuitry is not in an output state, the battery cell group is electrically divided into a plurality of sub-group of battery cells, with each sub-group having a smaller number of battery cells than the total number of the battery cells within the battery pack.

Therefore, in this battery pack, a voltage impressed to space between battery cells having mutually different voltages within the battery pack, a voltage impressed to space between voltage monitor wires within the battery pack, and a voltage impressed to space between the voltage monitor wires and the battery cells within the battery pack, are lower than that of the commercial power source voltage, which prevents higher voltages from being impressed for a longer time to between adjacent segments which are spaced-apart.

In addition, a battery pack according to an exemplary embodiment of the present invention has battery modules each of which is composed of battery cells having the number smaller than the total number of the battery cells within the battery pack.

Therefore, in this battery pack, because a voltage impressed to space between battery cells having mutually different voltages within each battery module, a voltage impressed to space between the voltage monitor wires, and a voltage impressed to space between the voltage monitor wires and the battery cells, are lower than that of the commercial power source voltage, adjacent segments which are spaced-apart are not required to leave therebetween an isolation distance having a required length under the voltage of the commercial power source. This is contributable to simplification of the interior structure of the battery modules.

The battery pack has a main controller incorporating discharge control circuitry, wherein the main controller incorporates a detector configured to detect the state of the battery modules through input-output terminals of the battery modules, or a detector configured to detect the state of the battery modules through communication with the battery modules. A selected one of these detectors allows the main controller to determine the state of the battery cells within the battery modules, without requiring complex electrical wiring, which contributes to simplification of the interior structure of the battery modules.

Because the battery module is exposed only at its input-output terminals for electrical connection with the main controller, any foreign matters are prevented from entering the battery modules from the outside. Therefore, it is easier to provide electrical isolation between the battery cells or the like, within the battery modules, which contributes to simplification of the interior structure of the battery modules.

If the battery pack is configured to include a device for interrupting current flow through the input-output terminals of the battery modules, while the battery pack remains unused for a long term, to thereby prevent long-term voltage impression between opposite ones of the input-output terminals, with improved easiness to provide electrical isolation. In addition, even if current flow through the input-output terminals is blocked where the discharge is needed, the voltage impressed between the opposite ones of the input-output terminals is lower than that of the commercial power source voltage, and therefore, there is no need to leave between the terminals an isolation distance having a required length under the voltage of the commercial power source, which contributes to simplification of the interior structure of the battery pack.

Furthermore, a battery pack according to an exemplary embodiment of the present invention has a detector configured to detect an electrical connection state in which an outlet plug of an electric device is connected to the discharge output terminals, and the battery pack is configured to control output through the input-output terminals of the battery modules, or otherwise through the discharge output terminals of the battery pack. If this battery pack interrupts the output, in a selected one of a state in which the outlet plug is not electrically connected with the discharge output terminals and a state in which the electrical device remains unused with the outlet plug inserted into the outlet terminals, a tracking phenomenon which is caused by long-term impression of voltage between opposite ones of each of the terminals. In addition, the use of an outlet cover which moves integrally with the detector would provide a user with visual perception of safety.

There will be next described effects of an exemplary embodiment of the present invention, with respect to duplicate protection during charge. A module controller which is housed in a battery module within a battery pack according to the present invention has a detector configured to detect a state of battery cells within the battery module, and has a device configured to interrupt a charging path within the battery module, if a determination is made that it is in a state in which the battery cells are not permitted to be charged. A main controller having charge control circuitry has a detector configured to detect a state of the battery modules through input-output terminals of the battery modules, and has a charge interruption device configured to interrupt a charging path between the charge input terminals and the battery module group is interrupted, if a determination is made that it is in a state in which the battery modules are not permitted to be charged. In addition, the main controller and the module controller communicate with each other, and the module controller has a charge interruption device configured to interrupt the charging path in the battery modules, if the module controller recognizes, through the communication, that the main controller is in a state in which the charge is inhibited, has interrupted the charging path battery, while the main controller has a device configured to interrupt a charging path between the charge input terminals and the battery module group, if the main controller recognizes, through the communication, that the module controller is in a state in which the charge is inhibited.

In the battery pack, a plurality of battery modules are electrically interconnected in series, and therefore, even if it is brought into a failure in which the charge of at least one of the battery modules cannot be interrupted, the charge of the remaining battery modules can be interrupted, because of the use of any one of the aforementioned charge interruption devices. Accordingly, when the battery pack, for being charged, is connected directly to the commercial power source which cannot be controlled, even if any one of segments within the battery pack, which perform the charge interruption, that is, one unit of the main controller and the plurality of battery modules, is brought into a state in which the charge of any one of the segments cannot be interrupted, the remaining segments can interrupt of the charge, which provides reliability higher than duplicate protection.

According to another aspect of the present invention, a battery pack usable as a power source for an electric device is provided, which comprises a battery cell group in which a plurality of battery cells are electrically interconnected in series; discharge control circuitry configured to control discharging of the battery cell group; discharge output terminals (e.g., s outlet terminals 110 for discharging as described below) through which electric output of the discharge control circuitry is supplied to the electric device; and a case that houses the battery modules, the discharge control circuitry and the discharge output terminals, wherein the battery pack outputs a voltage of not lower than 100 V through the discharge output terminals .

In an example of the battery pack, each battery cell is generally cylindrical, with a diameter in a range of approximately 16 mm and approximately 18 mm, and a height in a range of approximately 20 mm to approximately 30 mm.

According to still another aspect of the invention, a battery pack is provided which comprises: a plurality of battery cells serially interconnected; a connect/disconnect device (e.g., FET 130 for module discharge as described below) configured to selectively interrupt current flow between the battery cells, the connect/disconnect device allows the current flow between the battery cells when the battery pack outputs; and output terminals through which a voltage of not lower than 100 V is supplied through the battery cells.

### Brief Description of Drawings

FIG. 1 is a perspective view illustrating the exterior of a battery pack according to an exemplary embodiment of the present invention;
FIG. 2 is a perspective view illustrating the exterior of a cordless power tool according to an exemplary embodiment of the present invention;
FIG. 3 is a perspective view illustrating the exterior of the bottom of the cordless power tool depicted in FIG. 2;
FIG. 4 is a perspective view illustrating the exterior of an electrical cord adapter according to an exemplary embodiment of the present invention;
FIG. 5 is a perspective view illustrating the exterior of the bottom of the electrical cord adapter depicted in FIG. 4;
FIG. 6 is a perspective view illustrating the exterior of an electrical cord for charging the battery pack depicted in FIG. 1;
FIG. 7 is a perspective view illustrating the exterior of an AC power tool;
FIG. 8 illustrates in functional block diagram, the battery pack depicted in FIG. 1 and the cordless power tool depicted in FIG. 2, when interconnected;
FIG. 9 illustrates in functional block diagram, the battery pack depicted in FIG. 1 and the AC power tool depicted in FIG. 7, when interconnected;
FIG. 10 illustrates in functional block diagram, the battery pack depicted in FIG. 1 and the electrical cord, when interconnected;
FIG. 11 illustrates in functional block diagram, the battery pack depicted in FIG. 1 and the electrical cord adapter, when interconnected;
FIG. 12 illustrates in functional block diagram, the cordless power tool depicted in FIG. 2 and the electrical cord adapter, when interconnected;
FIG. 13 is an exploded perspective view of the battery pack depicted in FIG. 1;
FIG. 14 is a side view illustrating the interior structure of a battery module according to an exemplary embodiment of the present invention;
FIG. 15 is a top view illustrating the interior structure of the battery module depicted in FIG. 14;
FIG. 16 is a functional block diagram illustrating the battery module depicted in FIG. 14;
FIG. 17 is a side view illustrating the interior structure of the battery pack depicted in FIG. 14;
FIG. 18 is a top view illustrating the interior structure of the battery pack depicted in FIG. 14;
FIG. 19 is a top view illustrating the interior structure of the battery pack depicted in FIG. 14;
FIG. 20 is a fragmentary sectional side view of the battery pack depicted in FIG. 1 and the cordless power tool depicted in FIG. 2, when interconnected; .
FIG. 21 is a fragmentary sectional side view of the battery pack depicted in FIG. 1 and an outlet plug, when interconnected;
FIG. 22 is a fragmentary sectional side view of the battery pack depicted in FIG. 1 and the electrical cord for charging, when interconnected;
FIG. 23 is a fragmentary sectional side view of the battery pack depicted in FIG. 1 and the electrical cord adapter, when interconnected;
FIG. 24 is a side view of the cordless power tool depicted in FIG. 2 and the electrical cord adapter, when interconnected;
FIG. 25 is in a flowchart in conjunction with a basic operation of the battery pack depicted in FIG. 1;
FIG. 26 is a flowchart in conjunction with a long-term storage mode of the battery pack depicted in FIG. 1;
FIG. 27 is a flowchart in conjunction with a charge preparation mode of the battery pack depicted in FIG. 1;
FIG. 28 is a flowchart in conjunction with a charge mode of the battery pack depicted in FIG. 1;
FIG. 29 is a flowchart in conjunction with a discharge preparation mode of the battery pack depicted in FIG. 1; and
FIG. 30 is a flowchart in conjunction with a discharge mode of the battery pack depicted in FIG. 1.

### Best Mode for Carrying Out the Invention

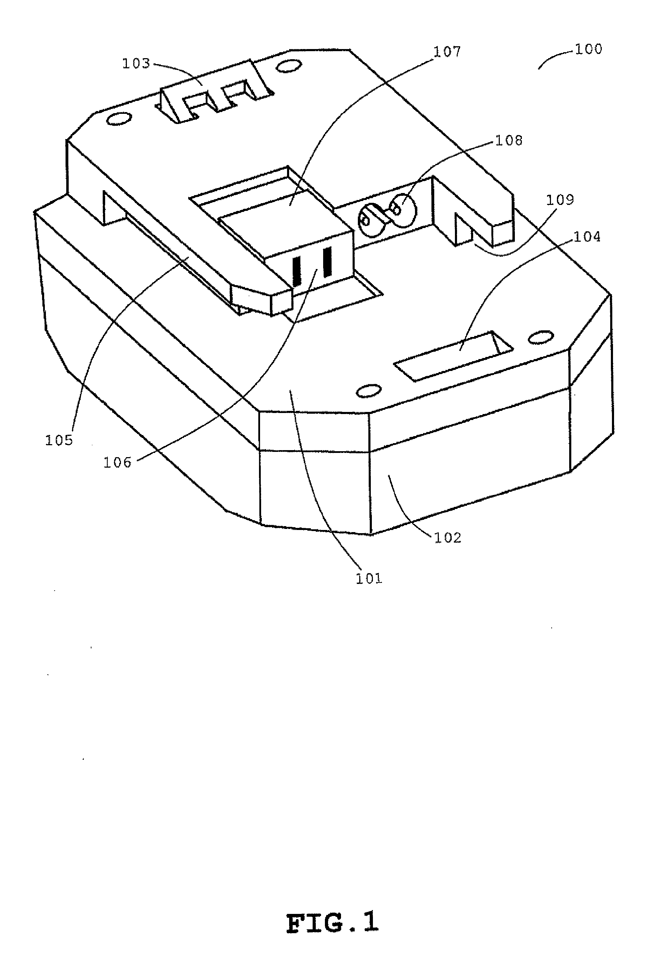

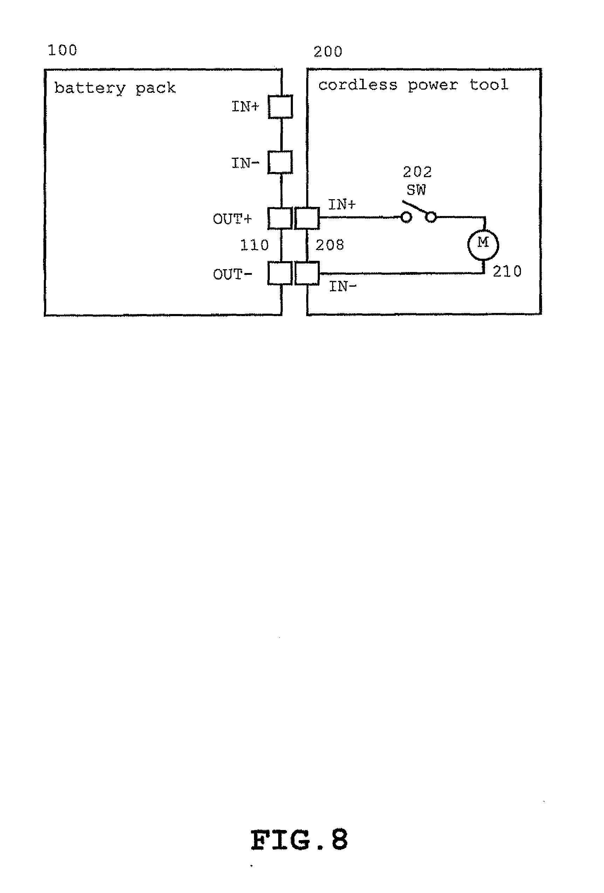

With reference to the drawings, a cordless power tool will be next described which is constructed according to an embodiment of the present invention. FIGS. 1-7 schematically illustrate the construction of a cordless power tool system, while FIGS. 8-12 schematically illustrate in block diagram how to use the cordless power tool system.

FIG. 1 illustrates the exterior of a battery pack 100 for use in the cordless power tool system. The battery pack 100 contains inner constituent components which are enclosed with an upper case 101 and a lower case 102 both of which are made of electrically-insulating material. The upper case 101 includes a movable hook-button 103; an engagement recess 104; slide rails 105; an outlet 106 for discharging which is identical in shape to the outlet of the commercial or common power source; a movable outlet cover 107 made of electrically-insulating material; and an inlet 108 for charging which has the same insertion direction as the outlet 106. Further, guide recesses 109 are disposed at the front ends of the slide rails 105.

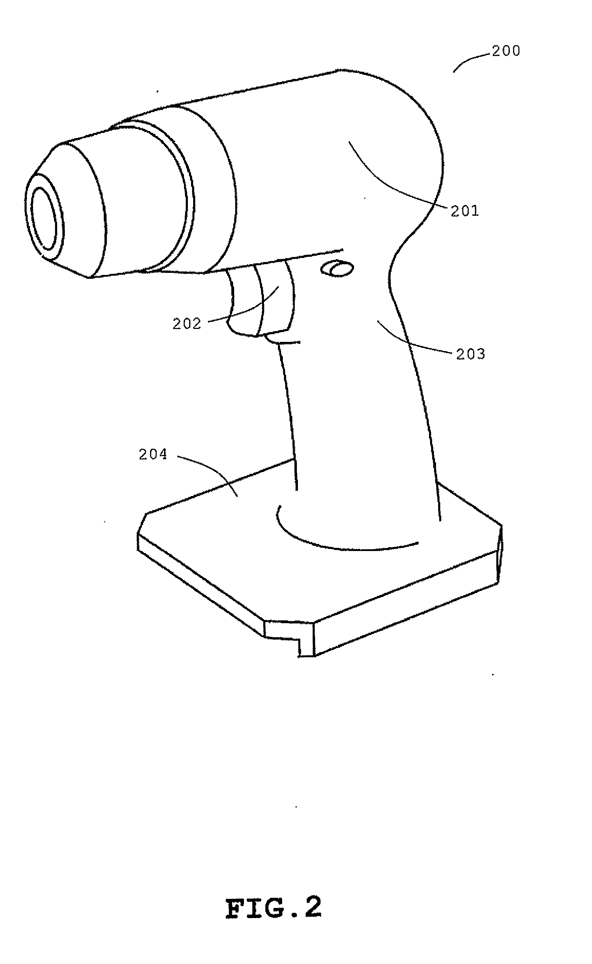

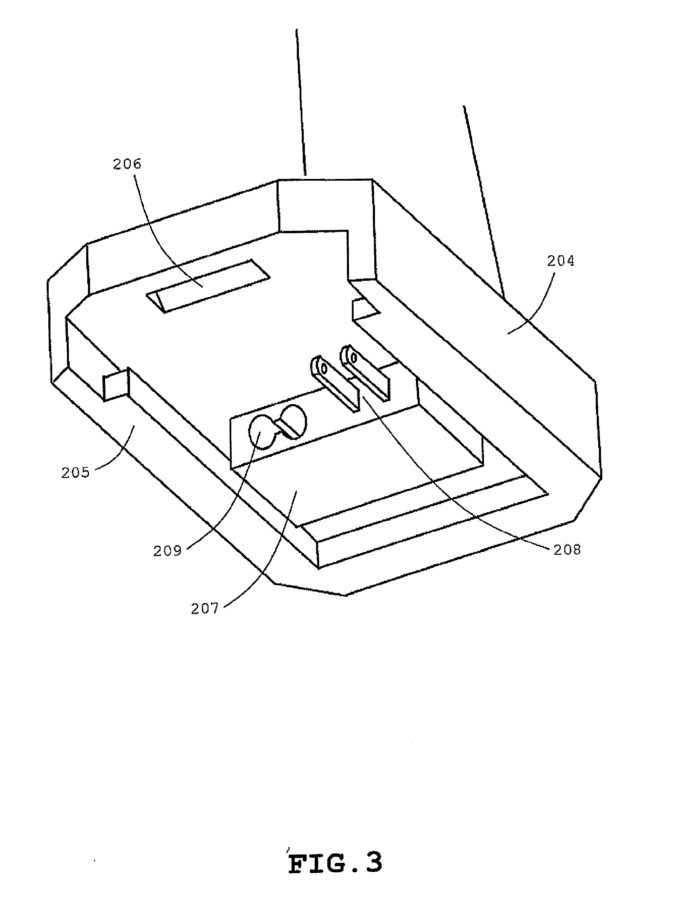

FIG. 2 illustrates the exterior of a cordless power tool 200 which is a part of the cordless power tool system. In addition, FIG. 3 illustrates the exterior of the bottom of the cordless power tool 200. The cordless power tool 200 has a motor housing 201 which houses an AC motor adapted to be powered by the commercial power source; a switch 202 for control of the AC motor; a handle 203; and a battery pack retainer 204 for connection with the battery pack 100. The battery pack retainer 204 has guide rails 205 extending along the slide rails 105 of the battery pack 100, an engagement recess 206 extending along the hook-button 103 of the battery pack 100, and a terminal block 207 made of electrically-insulating material. The terminal block 207 includes a power-input terminal 208 and a dummy recess 209. The power-input terminal 208 is identical in shape to the terminal of the outlet plug for the commercial power source and supply electricity to the motor. The dummy recess 209 has no terminal for electrical connection.

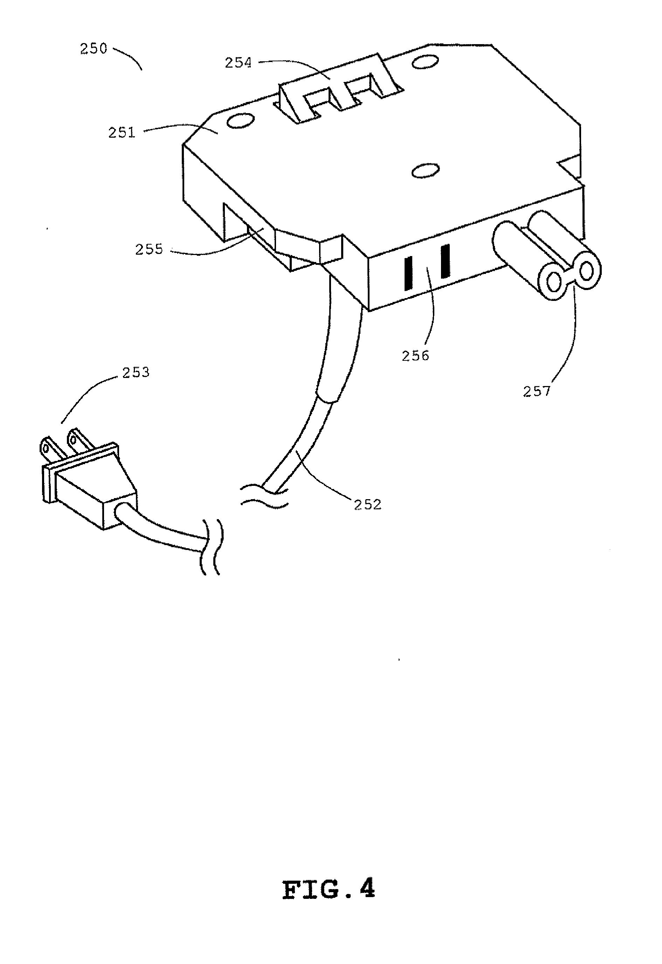

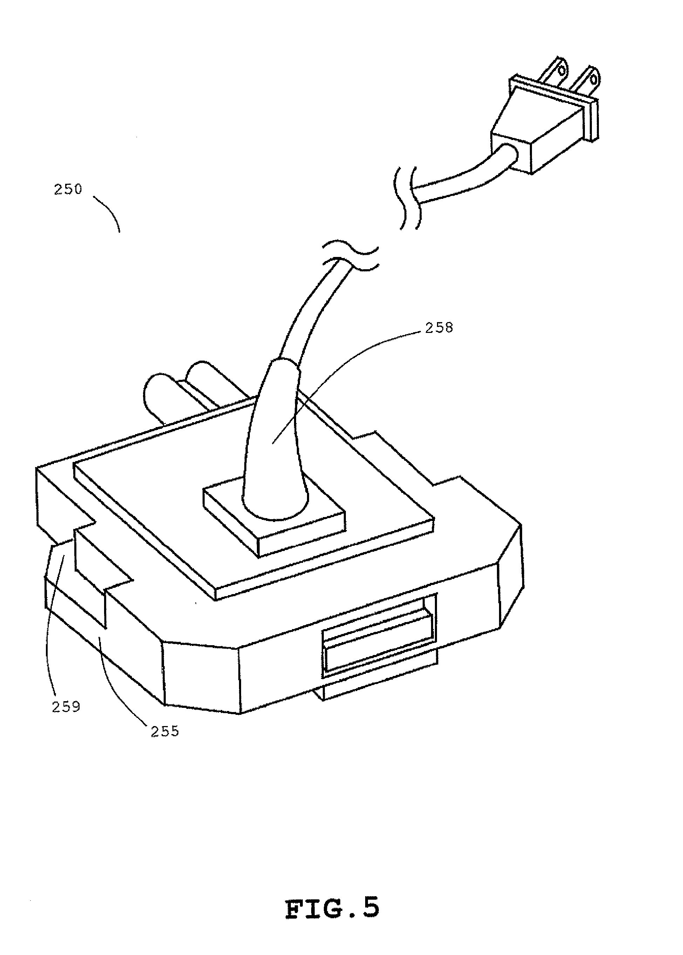

FIG. 4 illustrates the exterior of an electrical cord adapter 250 for use in the cordless power tool system. In addition, FIG. 5 illustrates the exterior of the bottom of the electrical cord adapter 250 illustrated in FIG. 4. The electrical cord adapter 250 is constructed to primarily include a case 251 made of electrically-insulating material; an electrical cord 252; an outlet plug 253 which is located at a front end of the electrical cord 252; a hook-button 254 extending along the engagement recess 206 of the cordless power tool 200; slide rails 255; a power-supply terminal 256 for discharging; and a power-supply terminal 257 for charging. The power-supply terminal 257 is adapted to be inserted into and along the inlet 108 of the battery pack 100 and the dummy recess 209 of the cordless power tool 200. A cord guard 258 covers a connection between the electrical cord 252 and the electrical cord adapter 250. In addition, front ends 259 of the slide rails 255 are adapted to be inserted into the guide recesses 109 of the battery pack 100.

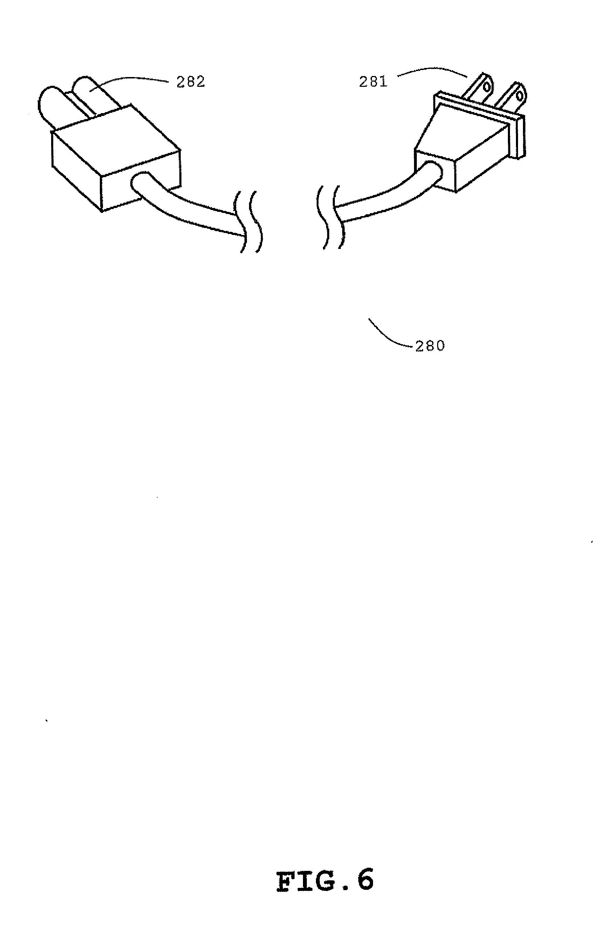

FIG. 6 illustrates the exterior of an electrical cord 280 for charging the battery pack 100 for use in the cordless power tool system. At both ends of the electrical cord 280, there are an outlet plug 281 and a power-supply terminal 282 for charging. Particularly, the power-supply terminal 282 is identical in shape to the power-supply terminal 257 of the electrical cord adapter 250 and can be inserted into and along the inlet 108 of the battery pack 100.

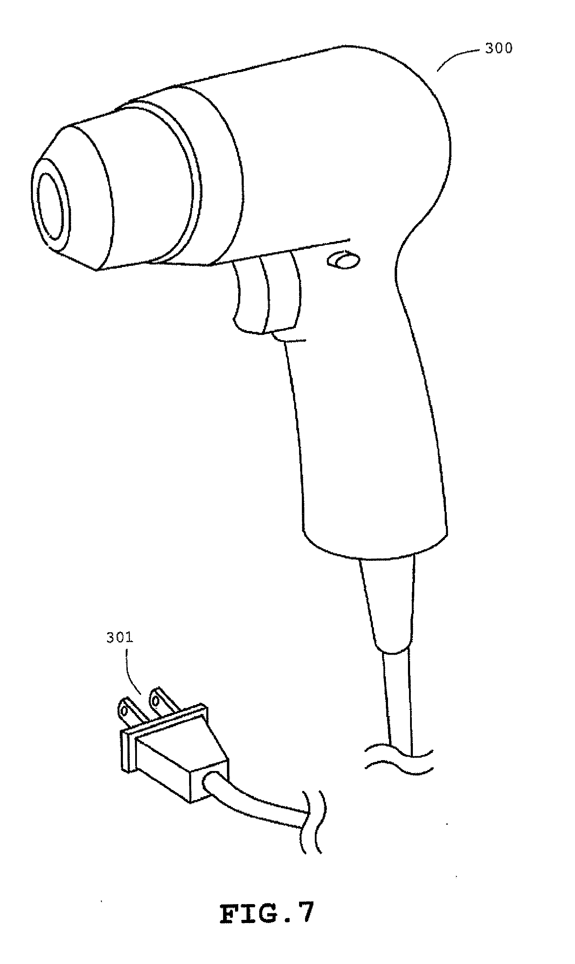

FIG. 7 illustrates the exterior of a conventional AC power tool 300. The AC power tool 300 has an outlet plug 301 for input of AC voltage from the commercial power source.

FIG. 8 illustrates in functional block diagram, the battery pack 100 according to an embodiment of the present invention and the cordless power tool 200 d according to an embodiment of the present invention, when connected. The battery pack 100 outputs AC electricity which substantially achieves the effective value of the commercial power source. In the cordless power tool 200, an AC motor is driven by AC electricity which is supplied from the battery pack 100 and which is then delivered from a terminal 110 for discharging of the battery pack 100, to the AC motor, through the power-input terminal 208 and the switch 202.

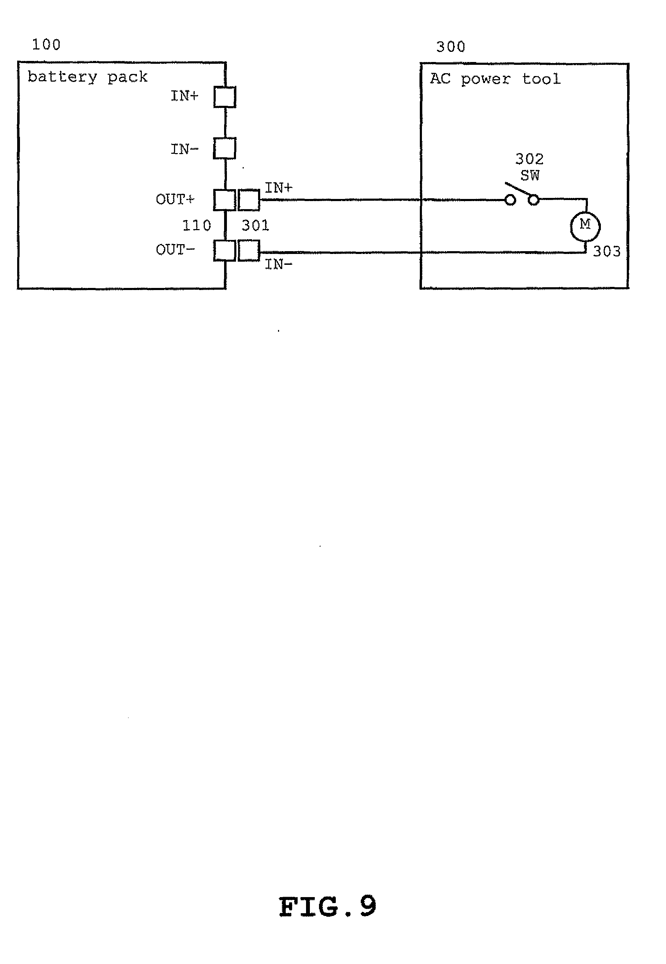

FIG. 9 illustrates in functional block diagram, the battery pack 100 according to an embodiment of the present invention and the conventional AC power tool 300, when connected. The battery pack 100 outputs AC electricity which substantially achieves the effective value of the commercial power source, through the terminal 110. In the AC power tool 300, an AC motor 303 is driven by AC electricity which is supplied from the battery pack 100 and which is then delivered from the terminal 100 of the battery pack 100 to the AC motor 303, through the outlet plug 301 and a switch 302.

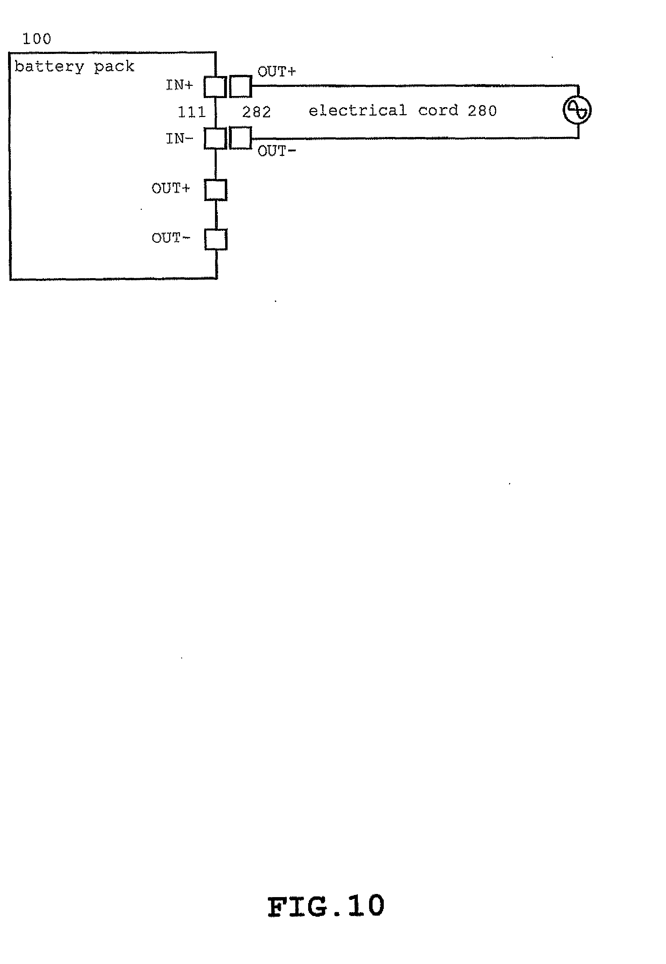

FIG. 10 illustrates in functional block diagram, the battery pack 100 according to an embodiment of the present invention and the electrical cord 280, when connected. The battery pack 100 is of a type that allows the battery pack 100 to be charged by direct input from the commercial power source without using any charger. Therefore, the battery pack 100 is charged by electricity from the electrical cord 280 which is electrically connected to the commercial power source, to the battery pack 100, through the power-supply terminal 282 and an inlet terminal 111 for charging.

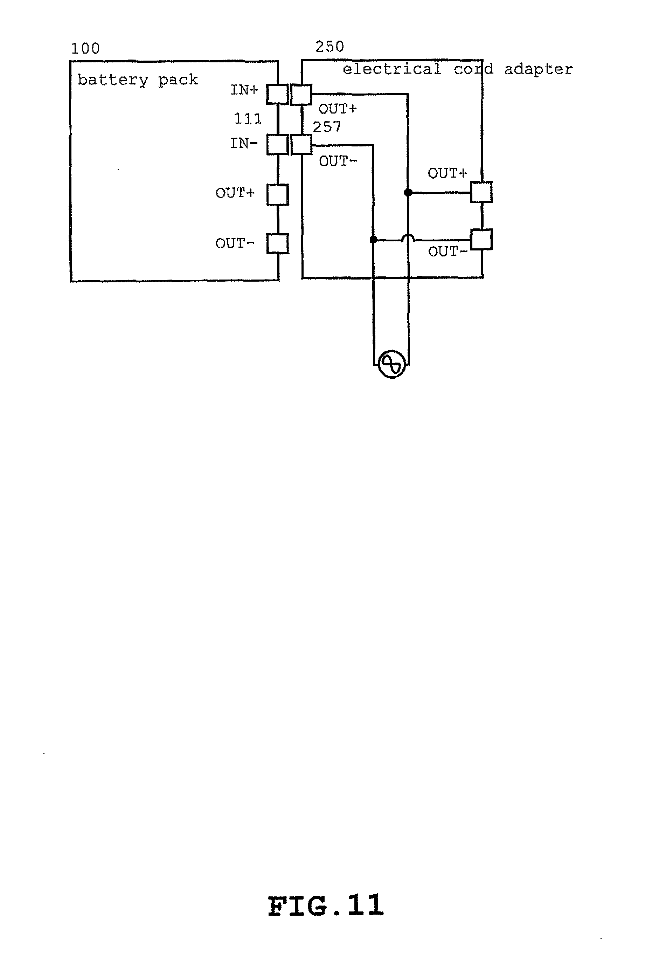

FIG. 11 illustrates in functional block diagram, the battery pack 100 according to an embodiment of the present invention and the electrical cord adapter 250 according to an embodiment of the present invention, when connected. The battery pack 100 is of a type that allows the battery pack 100 to be charged by direct input from the commercial power source without using any charger. Therefore, the battery pack 100 is charged with the intervention of the power-supply terminal 257 of the electrical cord adapter 250 electrically connected to the commercial power source, and the inlet terminal 111.

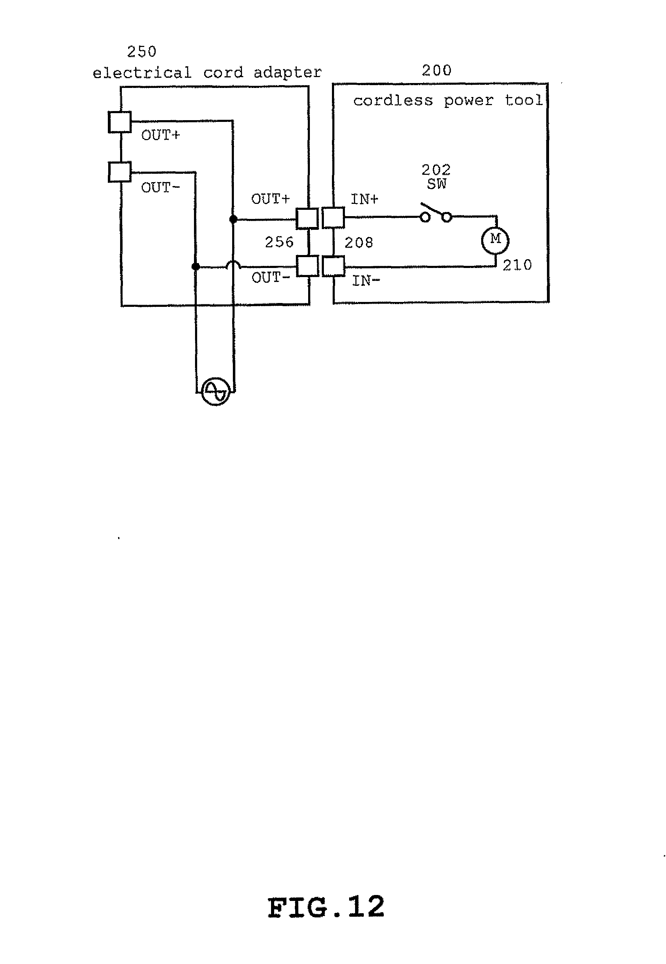

FIG. 12 illustrates in functional block diagram, the electrical cord adapter 250 according to an embodiment of the present invention and the cordless power tool 200 according to an embodiment of the present invention, when connected. In the cordless power tool 200, the AC motor 200 is driven by electricity which is supplied from the power-supply terminal 256 of the electrical cord adaptor 250 which is electrically connected to the commercial power source to the AC motor 200, through the power-input terminal 256 and the switch 202.

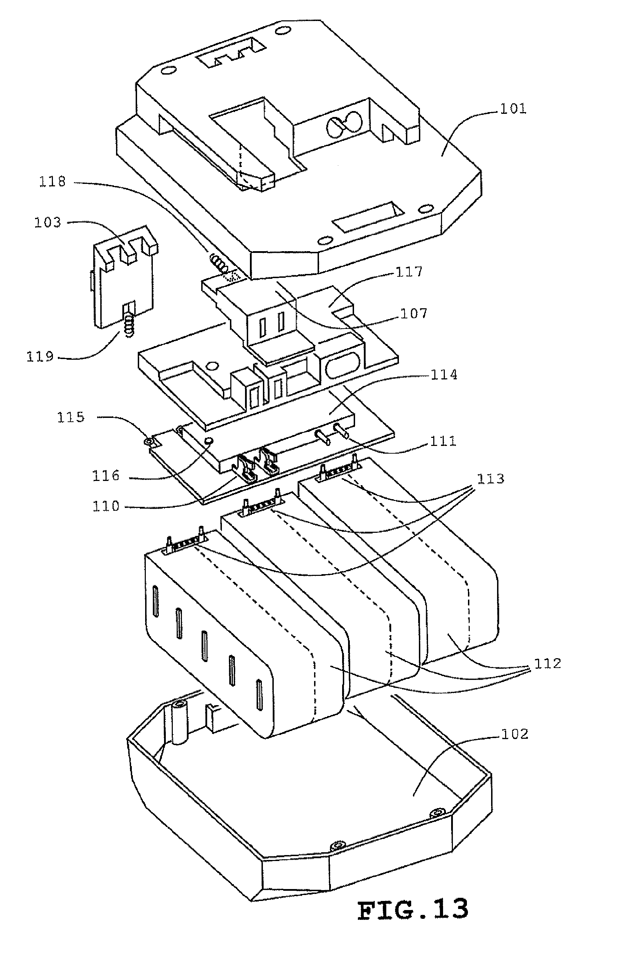

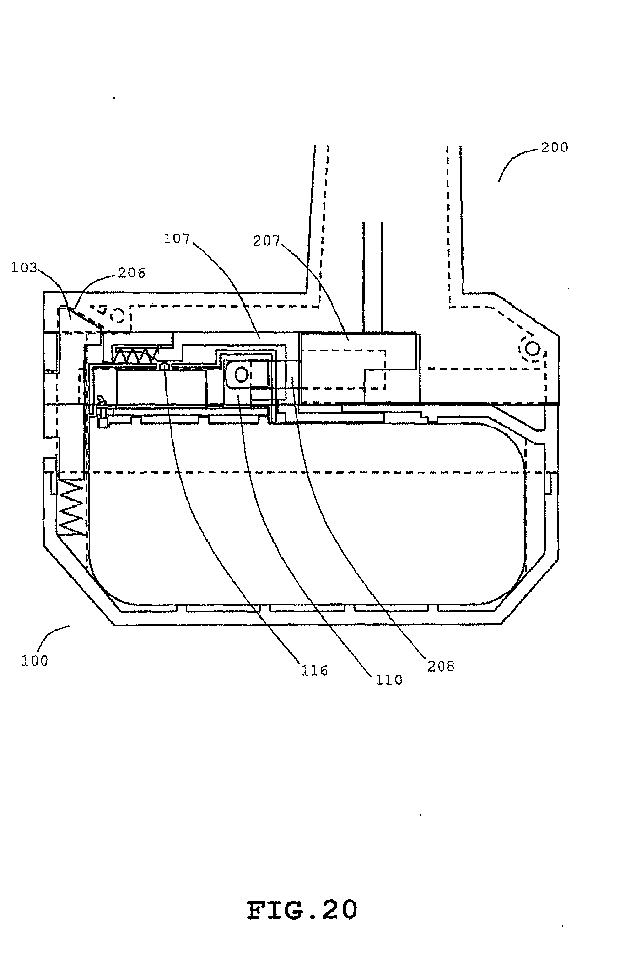

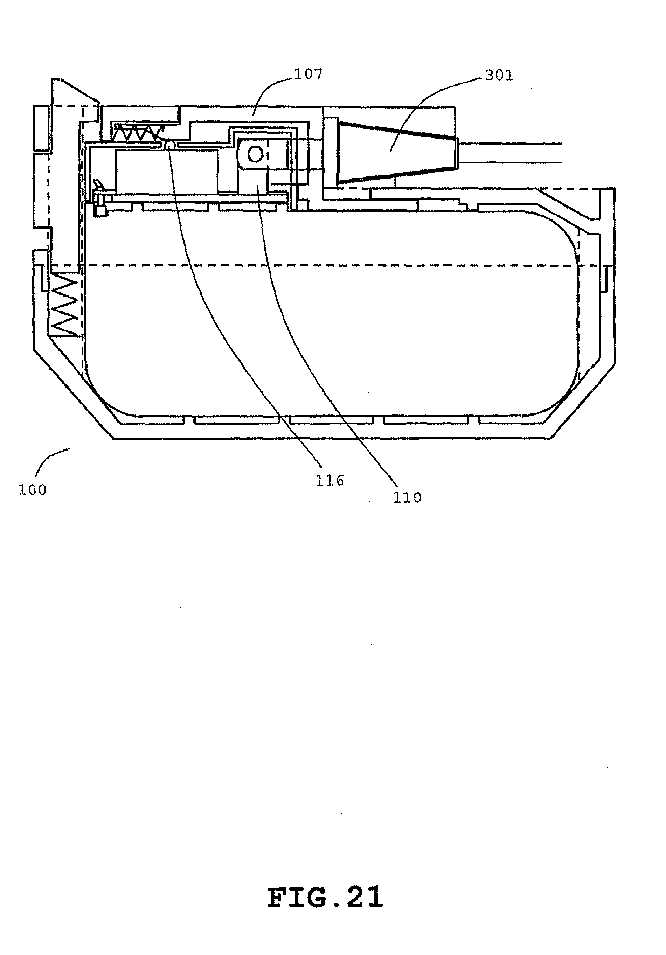

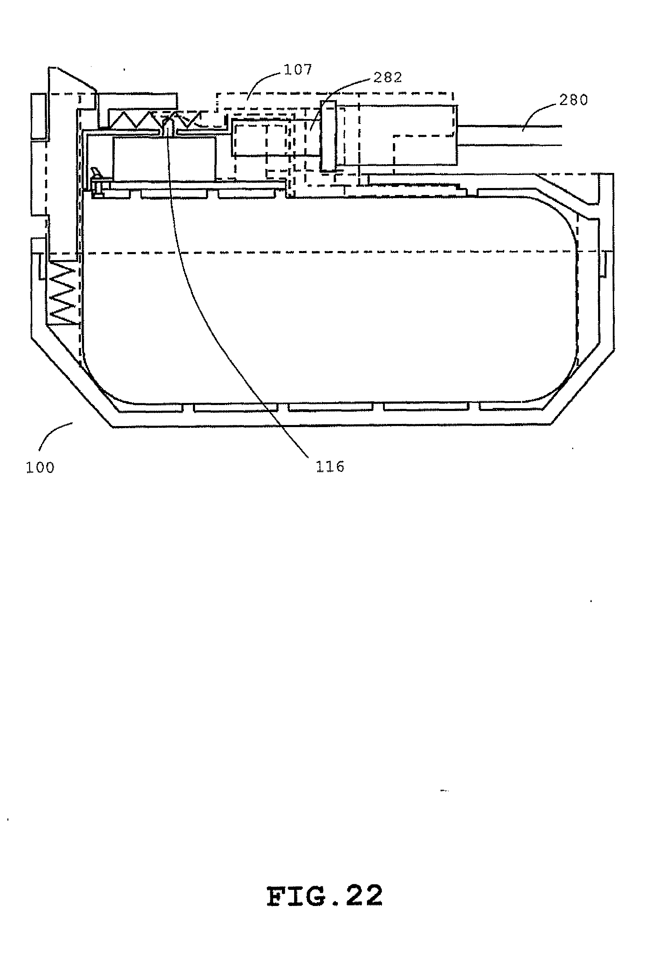

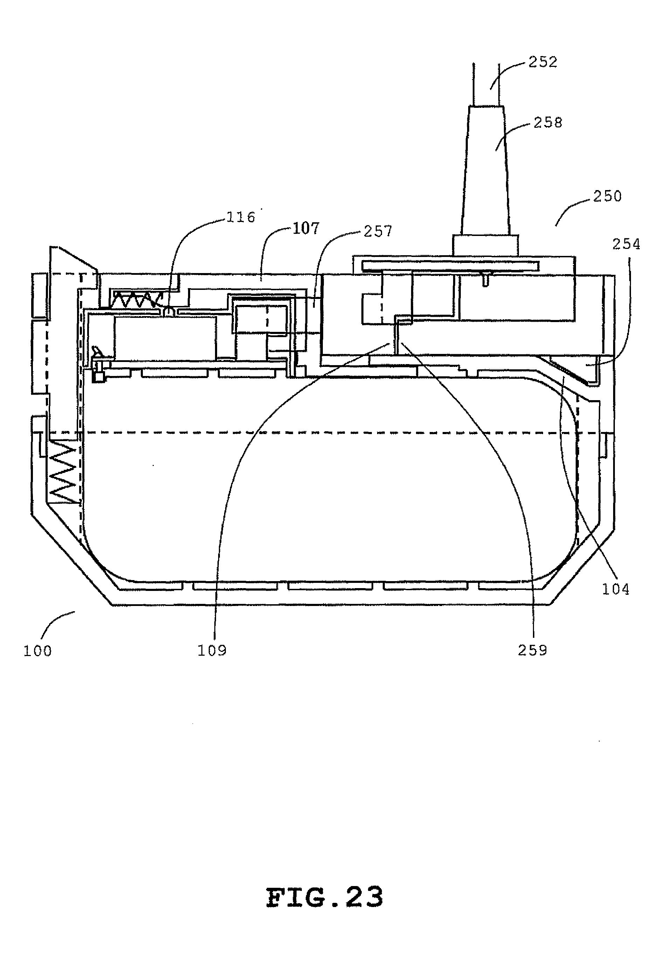

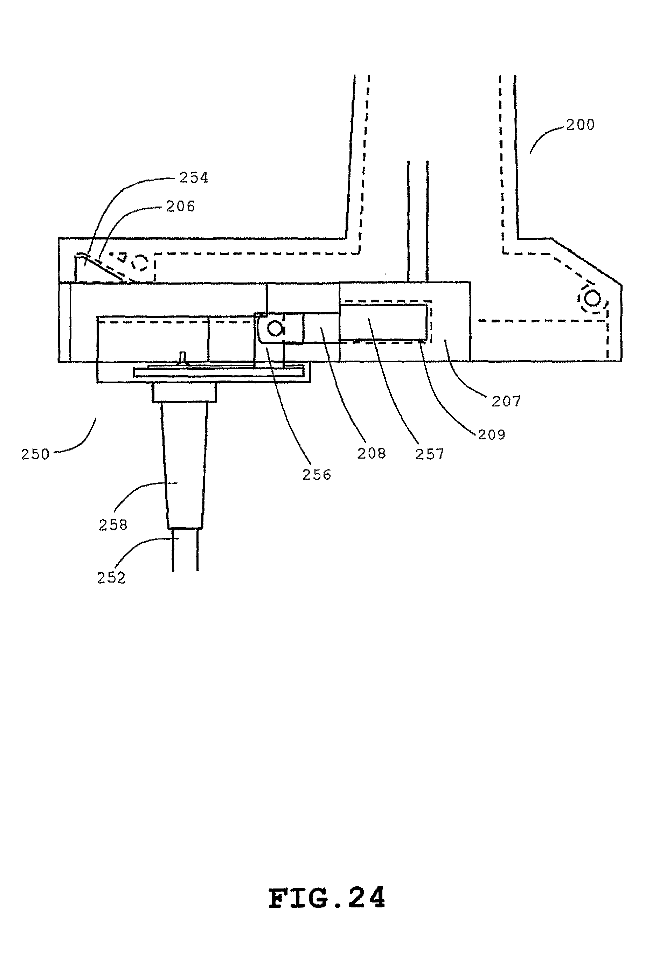

With reference to the drawings, a cordless power tool system will be next described which is constructed according to an embodiment of the present invention, with respect to its structural arrangement. FIGS. 13-19 are interior structure views and block diagrams of the battery pack 100 according to an embodiment of the present invention. FIG. 20 illustrates the battery pack 100 according to an embodiment of the present invention and the cordless power tool 200 according to an embodiment of the present invention, when connected. FIG. 21 illustrates the battery pack 100 according to an embodiment of the present invention and the outlet plug 301 of the electrical cord of the conventional AC power tool 300, when connected. FIG. 22 illustrates the battery pack 100 according to an embodiment of the present invention and the electrical cord 280, when connected. FIG. 23 illustrates the battery pack 100 according to an embodiment of the present invention and the electrical cord adapter 250 according to an embodiment of the present invention, when connected. FIG. 24 illustrates the cordless power tool 200 and the electrical cord adapter 250 both of which are constructed according to an embodiment of the present invention, when connected.

For the number of Li-ion battery cells 120 for use in the battery pack 100 according to an embodiment of the present invention, the number of Li-ion battery cells 120 is preferably selected so as to allow a DC voltage of a group of serially-connected battery cells to be converted into an AC voltage for output, and allow the AC voltage to have its effective value which is comparable to that of the commercial power source. The battery pack 100 is preferably comprised of two or more battery modules 112. Particularly, the number of the battery cells 120 within the battery module 112 is preferably a selected one of factors or divisors of the total number of the battery cells 120. It is added that the battery cells 120 are not limited in type to Li-ion batteries but may cover a wide range of alternatives in the form o'f rechargeable batteries which can generate electric power within the battery pack 100. The battery pack 100 when it uses twenty-seven (27) Li-ion battery cells 120 and three (3) battery modules 112 will be next described as the best mode in which the present invention is carried out.

FIG. 13 is an exploded perspective view of the battery pack 100 according to an embodiment of the present invention. The battery pack 100 according to an embodiment of the present invention houses three (3) battery modules 112; a main controller assembly 114; a controller cover 117 made of electrically insulating material; the hook-button 103 made of electrically insulating material; a spring 119 allowing slide movement of the hook-button 103; the outlet cover 107 made of electrically insulating material; and a spring 118 allowing slide movement of the outlet cover 107. These inner constituent components are enclosed with the upper case 101 and the lower case 102, both of which are made of electrically insulating material. In the controller cover 117, if an additional wall is interposed between both pins of the terminal 110 disposed at the main controller assembly 114, then reliability of electrical insulation will be improved. A similar wall may be provided to the outlet cover 107.

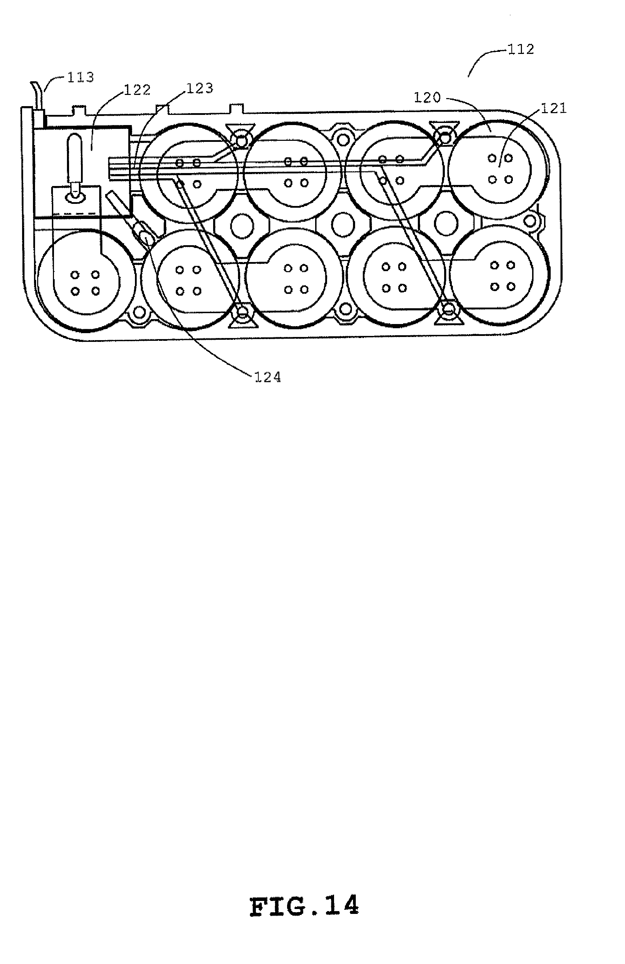

FIG. 14 is a side view illustrating the interior structure of the battery module 112, which is constructed according to an exemplary embodiment of the present invention. Nine (9) battery cells 120 are electrically interconnected in series into a battery cell group with lead plates 121 attached thereto by spot-welding or the like. Particularly, the voltage of the battery cell group is preferably selected for a Li-ion battery cell, such that the nominal voltage of the battery module is 36 V in the form of a serial connection of ten (10) or fewer battery cells each having a nominal voltage of 3.6 V, or such that a maximum voltage of the battery module when fully charged is equal to or lower than 42 V because each individual Li-ion battery cell has, in general, a maximum voltage of 4.2 V when fully charged. Because the battery pack 100 is configured to house three (3) battery modules 112, the total output voltage of the battery pack 100 amounts to 108 V (in nominal voltage). This prevents every section within the battery module 112 from having an electrical potential above 42 V which, reportedly, can cause electric shock to a human body, resulting in the contribution to the improved safety when the battery module 112 is being manufactured.

In addition, for detecting the voltages of the battery cells 120, voltage monitor wires 123 are electrically connected at their one ends with the lead plates 121 and at their other ends with a module controller 122. A temperature sensor 124 is disposed at a location suitable for detecting the temperatures of the battery cells, and is electrically connected with the module controller 122. For electrical connection between the module controller 122 and the main control box 114, the battery module 112 is exposed only at its battery input-output terminals 113.

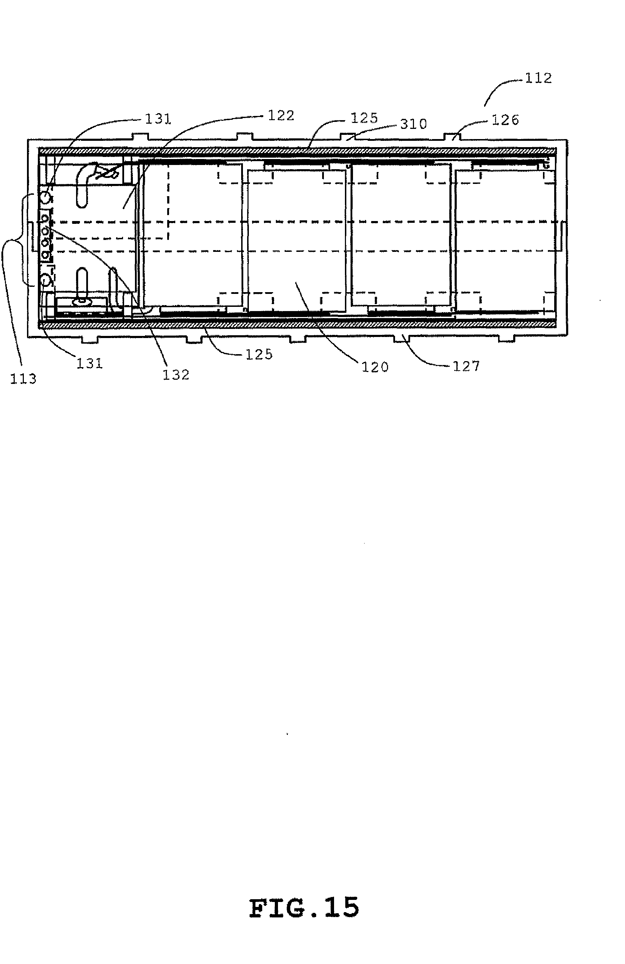

FIG. 15 is a top view illustrating the interior structure of the battery module 112, which is constructed according to an embodiment of the present invention. The battery module 112 houses the battery cell group in the form of a serial connection of nine (9) battery cells 120, the voltage monitor wires 123, the temperature sensor 124 and the module controller 122. These inner elements are enclosed with a right-hand module case 126 and a left-hand module case 127 which have respective inner walls (illustrated in FIG. 14) extending along a line of the battery cells 120, and which have respective connections overlapped with each other. Cushioning materials 125 illustrated in FIG. 14 in crosshatch are interposed between both ends of the battery cells 120 and the module cases 126, 127. Alternatively, an outer case of the battery module 112 may be of a type in which a heat-shrinkable laminated sheet is used to enclose those inner elements. The battery input-output terminals 113 are comprised of module input-output portions 131 and a module-controller digital-communication portion 132. It is added that, in the presence of an undesirable gap between the module cases 126 and 127, the gap is preferably filled with an electrically-insulating filler or sealer by molding.

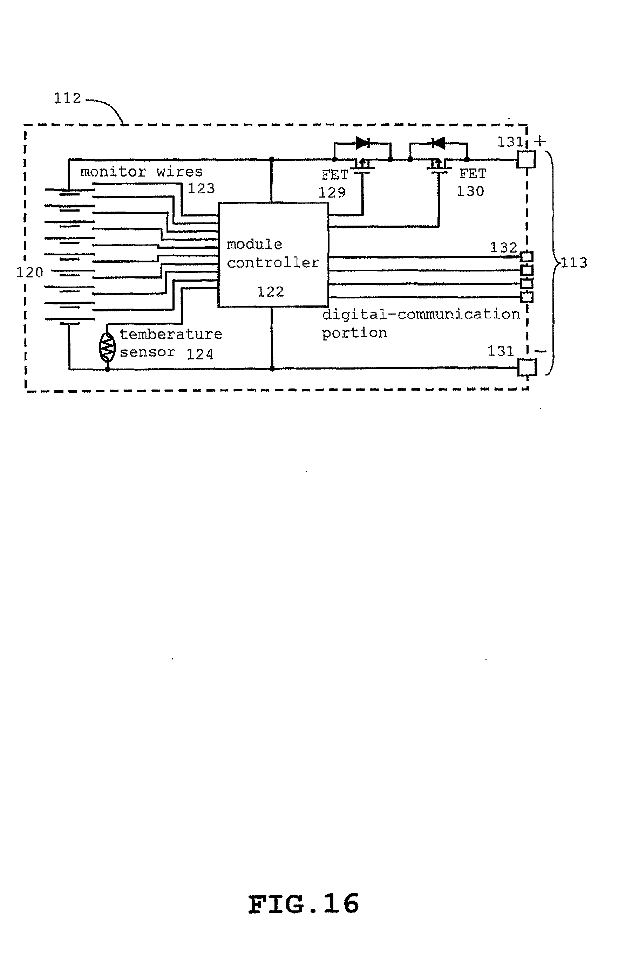

FIG. 16 is a block diagram illustrating the battery module 112 according to an embodiment of the present invention. Nine (9) battery cells 120 are electrically interconnected in series and electrically connected with the module input-output portions 131 through an FET 129 for module charge and an FET 130 for module discharge. The module controller 122 is electrically connected with the voltage monitor wires 123 for cell voltage detection and the temperature sensor 124 for cell temperature detection, and performs control using the FETs 129 and 130. In addition, the module controller 122 has the module-controller digital-communication portion 132 and communicates digitally with a main controller 134 described later, through the module-controller digital-communication portion 132 and a main-controller digital-communication portion 139.

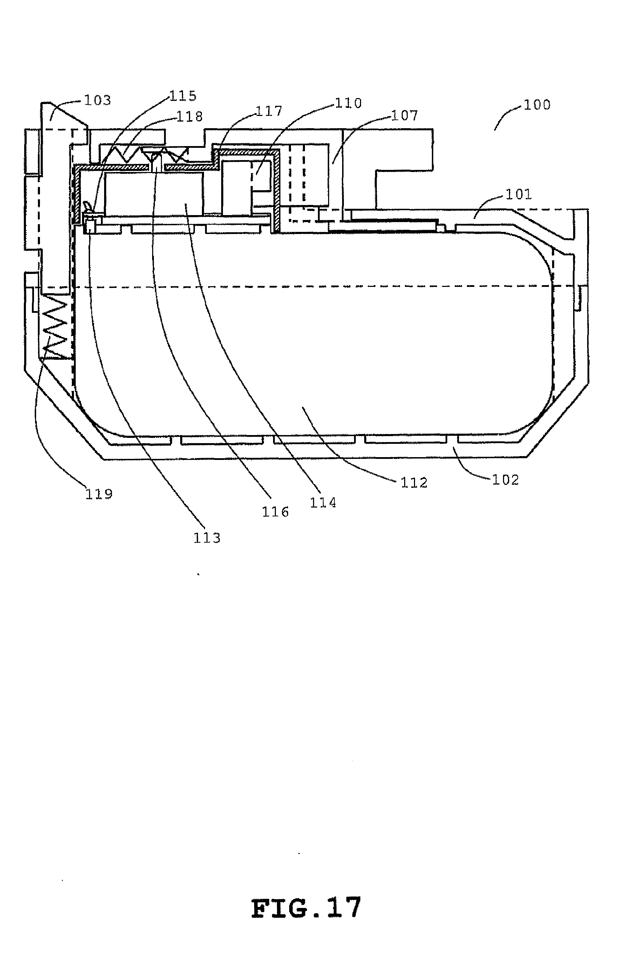

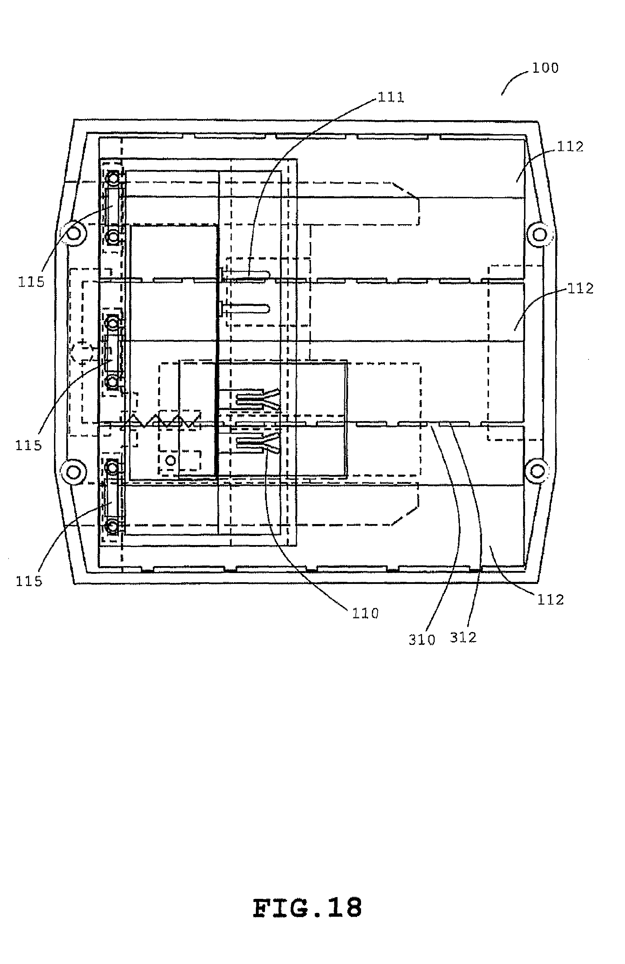

FIG. 17 is a side view illustrating the interior structure of the battery pack 100, while FIG. 18 is a top view illustrating the interior structure of the battery pack 100. The battery input-output terminals 113 of the battery module 112 are electrically connected with terminals 115 (for connection between the main controller 134 and the battery module 112) of the main controller assembly 114. The controller cover 117 illustrated in cross hatch encloses around the main controller assembly 114, so as to leave openings for allowing insertion of the inlet terminal 111 and the terminal 110, and such that one of the surfaces of the main controller assembly 114 which is adjacent to the battery modules 112 is not covered with the controller cover 117. At the outlet cover 107, the spring 118 is disposed for allowing slide movement of this outlet cover 107, and an outlet cover switch 116 which is attached to the main controller assembly 114 is disposed so as to move integrally with the outlet cover 107. These elements, the hook-button 103 and the spring 119 for allowing slide movement of the hook-button 103 are enclosed with the upper case 101 and the lower case 102 which have respective connections overlapped with each other. In case the upper case 101 is broken, the controller cover 117 is interposed between the live parts of the main controller assembly 114 and the outside of the battery pack 100, and therefore, the controller cover 117 serves for improvement in the reliability of the electrical insulation between the live parts of the main controller assembly 114 and the outside of the battery pack 100. Adequate clearance between adjacent ones of the battery modules 112 could serve for effective prevention of heat accumulation in a group of many battery cells in series. Additionally, the movement of the outlet cover 107 allows the user to visually perceive an ON/OFF state of the battery pack 100. In an alternative, a detector is provided for detecting the state of charge of the battery cell 120, and an indicator is also provided for indicating the ON/OFF state to the user, in addition to an original function of displaying the state of charge.

Li-ion battery cells that have been widely used in electrical appliances include a cylindrical cell having a typical size, that is, a diameter of 18mm and a height of 65mm. When the battery pack 100 houses twenty-seven (27) Li-ion battery cells 120, like an embodiment of the present invention, if each battery cell 120 is shaped as the above-described cylindrical cell having a diameter of 18mm and a height of 65mm, then the battery pack 100 will become too large and heavy to a power tool user. Then, in an embodiment of the present invention, the battery pack 100 is provided so as to house twenty-seven (27) Li-ion battery cells 120 each of which has a diameter of 18mm like the above cylindrical cell, but has a height of, for example, 25mm.

As illustrated in FIGS. 14, 15, 17 and 18, the battery module 112 houses nine (9) Li-ion battery cells 120 each of which has the above-described size, that is, a diameter of 18mm and a height of 25mm, such that the battery cells 120 are arrayed with their ends on the same planes. The battery pack 100 houses three (3) battery modules 112 such that one of the battery modules 112 has the axes of the battery cells 120 which are coincident with the axes of the battery cells 120 within the remaining ones of the battery modules 112. By cell-by-cell comparison, the battery cells 120 of 25mm height are smaller in per-unit battery capacity than the above-described battery cells of 65mm height, because of the dependency on the height difference. By cell-group-by-cell-group comparison, however, one battery cell group having twenty-seven (27) battery cells 120 of 25mm height are equal in total size and weight to one battery cell group having eight (8) Li-ion battery cells of 65mm height for use in a 14.4V Li-ion battery pack used in a conventional 14.4V cordless power tool which is considered to be compacted and light-weighed. In addition, one battery cell group having twenty-seven (27) battery cells 120 of 25mm height are far better in a total output power and a total runtime of a battery pack than one battery cell group having eight (8) Li-ion battery cells of 65mm height, because, when one battery cell group having twenty-seven (27) battery cells 120 of 25mm height is employed, entry into higher voltage provides a drastic reduction in a load current and therefore a drastic reduction in electricity loss.

It is added that, for a cylindrical cell of 18mm diameter and 25mm height, which has been described above as an example of a Li-ion battery cell, the cylindrical cell can provide the above-stated general effects within a preferable shape range that includes a diameter ranging from 16mm to 18mm and a height ranging from 20mm to 30mm. The preferable shape range can further include the shape of a non-cylindrical battery cell which has a volume per unit that is equivalent to the specific shape range.

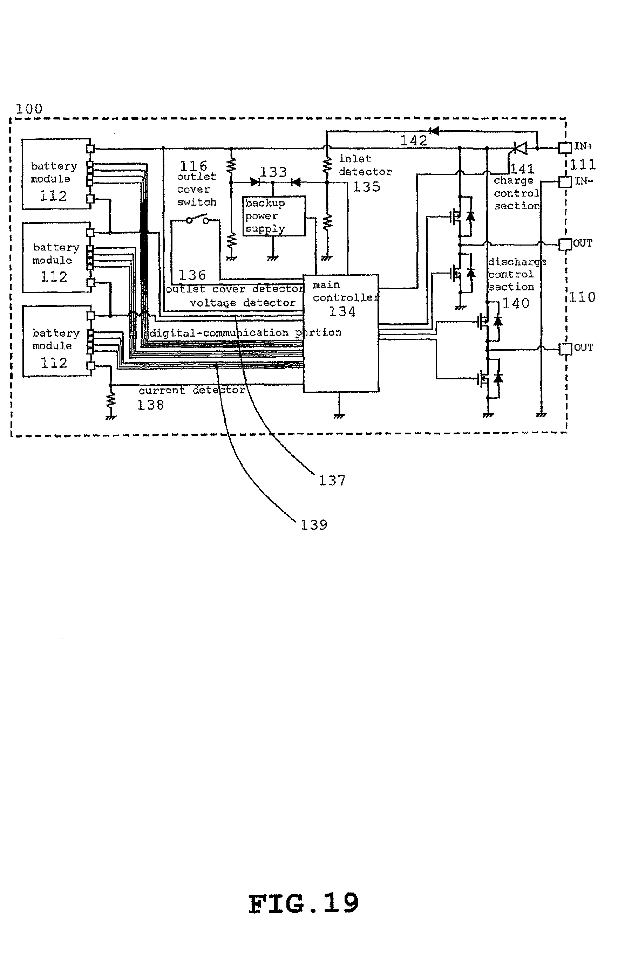

FIG. 19 is a block diagram of the battery pack 100. Three (3) battery modules 112 which are electrically interconnected in series are electrically connected with the terminal 110 through a discharge control section 140 having four (4) FETs as principal elements, and are electrically connected with the inlet terminal 111 through a charge control section 141 having one (1) SCR as a principal element. The main controller 134 is powered by a power supply circuit 133 with battery backup function and is electrically connected with a voltage detector 137 for battery module voltage detection, a current detector 138 for charging/discharging current detection, an outlet cover detector 136 for detecting movement of the outlet cover 107, and an inlet detector 135 for detecting entry into the electrical connection of the inlet terminal 111 to the commercial power source. In addition, the main controller 134 has the main-controller digital-communication portion 139 and communicates digitally with the module controller 122 through the main-controller digital-communication portion 139 and the module-controller digital-communication portion 132.

The discharge control section 140 is for converting a DC voltage of a group of series-connected battery cells 120 into an AC voltage, and, in an alternative, the discharge control section 140 may preferably take an arrangement other than four (4) FETs as long as the same goal can be achieved. The discharge control section 140 is preferably arranged to maintain an AC output which is equivalent to the effective value of the commercial power source, irrespective of how much the state of charge of the battery cells 120 is. Particularly, the discharge control section 140 is preferably arranged to detect the DC voltage of the battery cell group, and control a time duration spent at 0V while output. As a result, the user becomes able to work without noticing any reduction in the output resulting from a decrease in the state of charge of the battery cells 120.

The charge control section 141 is disposed for the purpose of supplying a DC current from the commercial power source to the battery cell group which is connected with the commercial power source in series, while controlling the amount of current to be supplied, using a device which is not limited to one (1) SCR if the same purpose can be achieved. Particularly in a charge control process, the charge control section 141 performs charge control such that the charging current is kept constant without exceeding an upper limit of current, until the Li-ion battery voltage reaches a predetermined voltage, and such that the battery voltage is maintained at the predetermined voltage after the Li-ion battery voltage has reached the predetermined voltage. For example, the charge control section 141 preferably detects a battery cell voltage and a charging current, and controls firing angles of the SCR so that the charging current and the charging voltage can reach their respective target values. It is added that, in an embodiment of the present invention, the battery pack 100 houses the charge control section 141, but in an alternative arrangement, the charge control section 141 may be disposed outside of the battery pack 100 and configured as a charger which is physically separated from the battery pack 100 and which has a case within which a device for recognizing the state of the battery pack 100 and a device for allowing electrical connection with the battery pack 100 are disposed.

For digital communications between the module controllers 122 and the main controller 134, the module controllers 122 of three (3) battery modules 112 are grounded to have mutually different electrical potentials, and therefore, in a preferable example, a photocoupler may be disposed within a selected one of each battery module 112 and the main controller 134, to thereby perform digital communications with electrical insulation securely provided. It is added that the communications between the main controller 134 and the module controllers 122 may be alternatively performed by analog signals, because the communications are for associating or synchronizing with control of the main controller 134 and control of the module controllers 122, each other.

FIG. 20 is a side view illustrating the interior structures of the battery pack 100 and the cordless power tool 200, when connected. Upon insertion of the battery pack 100 into the cordless power tool 200, the terminal block 207 of the cordless power tool 200 pushes the outlet cover 107 of the battery pack 100 for imparting slide movement thereto. The outlet cover switch 116, after brought into physical contact with the outlet cover 107, moves integrally with the outlet cover 107, and eventually turns ON at a location which allows the power-input terminal 208 of the cordless power tool 200 to be brought into electrical contact with the terminal 110 of the battery pack 100. The hook-button 103 of the battery pack 100 is fixedly received in the engagement recess 206 of the cordless power tool 200, and the battery pack 100 is held secured to the cordless power tool 200 until the hook-button 103 is released. In this state, the battery pack 100 determines whether discharging is permitted or not, and, if so, enters a discharging state permitting the cordless power tool 200 to be activated.

FIG. 21 is a side view illustrating the interior structures of the battery pack 100 and the outlet plug 201, when connected. Upon insertion of the outlet plug 301 of the AC power tool 300 into the battery pack 100, the outlet plug 301 pushes the outlet cover 107 of the battery pack 100 for imparting slide movement thereto. The outlet cover switch 116, after brought into physical contact with the outlet cover 107, moves integrally with the outlet cover 107, and eventually turns ON at a location allowing the outlet plug 301 is brought into electrical contact with the terminal 110 of the battery pack 100. In this state, the battery pack 100 determines whether discharging permitted or not, and, if so, enters a discharging state permitting the AC power tool 300 to be activated.

FIG. 22 is a side view illustrating the interior structures of the battery pack 100 and the electrical cord 280, when connected. Upon insertion of the power-supply terminal 282 of the electrical cord 280 into the inlet 108 of the battery pack 100, the commercial power source is connected for power supply to the inlet terminal 111 of the battery pack 100. In this state, the outlet cover 107 does not move and the outlet cover switch 116 is OFF. However, the main controller 134 detects the insertion of the electrical cord 280 into the battery pack 100, by means of the inlet detector 135, determines whether charging is permitted or not, and, if so, enters a charging state permitting the battery pack 100 to be charged.

FIG. 23 is a side view illustrating the interior structures of the battery pack 100 and the electrical cord adapter 250, when connected. Upon insertion of the power-supply terminal 257 of the electrical cord adapter 250 into the battery pack 100, the commercial power source is connected for power supply to the inlet terminal 111 of the battery pack 100. In this state, the electrical cord adapter 250 pushes the outlet cover 107 for imparting slide movement thereto, to thereby turn ON the outlet cover switch 116, However, the main controller 134 detects the insertion of the power-supply terminal 257 into the battery pack 100, by means of the inlet detector 135, determines whether charging is permitted or not, and, if so, enters a charging state permitting the battery pack 100 to be charged. In addition, the guide recesses 109 of the battery pack 100 slidably receive the front ends 259 of the slide rails of the electrical cord adapter 250. The hook-button 254 of the electrical cord adapter 250 is fixed to the engagement recess 104 of the battery pack 100, and the electrical cord adapter 250 is held fixed to the battery pack 100 until the hook-button 254 is released.

FIG. 24 is a side view illustrating the interior structures of the cordless power tool 200 and the electrical cord adapter 250, when connected. The slide rails 255 of the electrical cord adapter 250 can be inserted into and along the guide rails 205 of the cordless power tool 200, like the slide rails 105 of the battery pack 100. Once the hook-button 254 of the electrical cord adapter 250 has been inserted into the engagement recess 206 of the cordless power tool 200 up to a location allowing the hook-button 254 to be fixed to the engagement recess 206, the power-input terminal 208 which is disposed at the terminal block 207 of the cordless power tool 200 is brought into an electrical connection with the power-supply terminal 256 of the electrical cord adapter 250, which allows the electrical cord adapter 250 to supply electricity to the AC motor 210 of the cordless power tool 200. It is added that the power-supply terminal 257 which is disposed at the electrical cord adapter 250 is inserted into the dummy recesses 209 in which there is no electrical conduction, when the electrical cord adapter 250 is electrically connected with the cordless power tool 200.

As shown in FIGS. 23 and 24, the electrical cord adapter 250 can be electrically connected with any one of the battery pack 100 and the cordless power tool 200, and the electrical cord 252 of the electrical cord adapter 250 is preferably oriented in a different direction from a direction in which the electrical cord adapter 250 moves relative to a selected one of the battery pack 100 and the cordless power tool 200 for allowing electrical connection. Particularly, when the electrical cord 252 is oriented along a phantom line which extends from the motor housing 201 of the cordless power tool 200 to the handle 203, it is easier to arrange the electrical cord 252 when used, providing a user with improved ease-to-use.

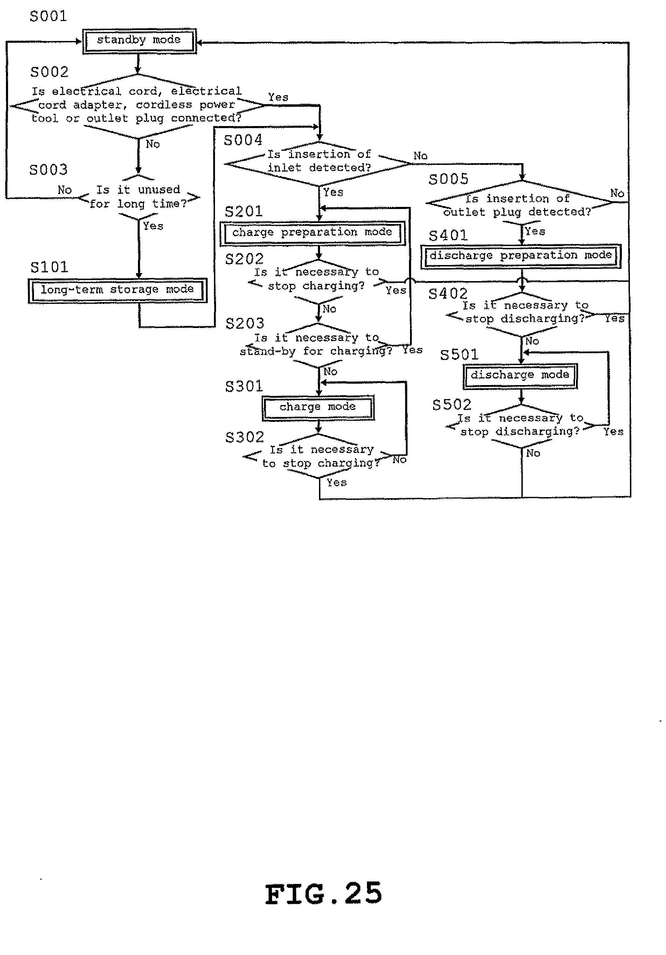

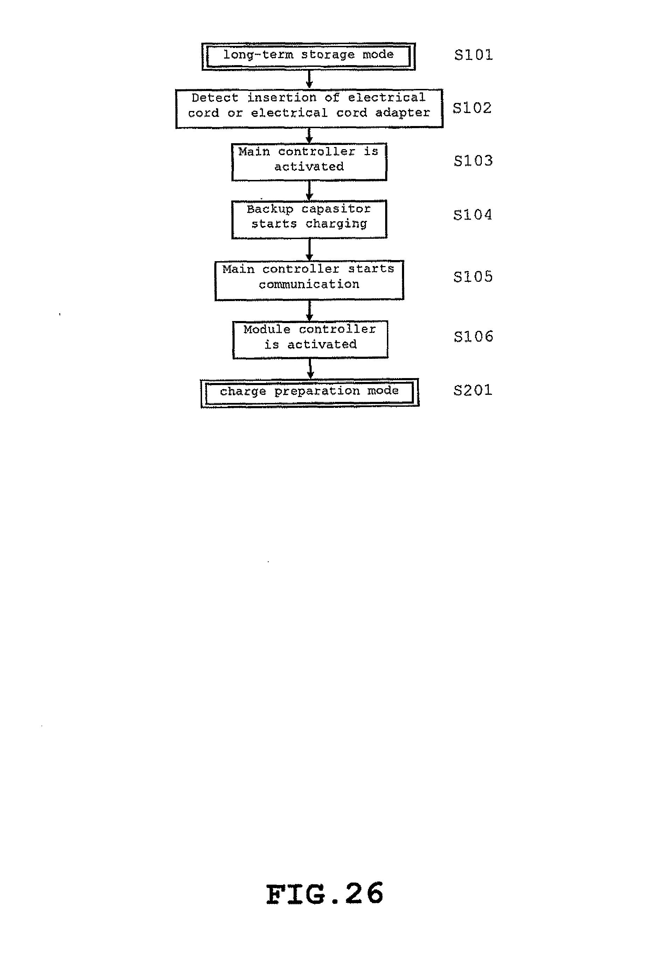

With reference to flowcharts, a cordless power tool system constructed according to an embodiment of the present invention will be described below with respect to its electrical control. FIG. 25 schematically illustrates the whole operation of the battery pack 100, while FIGS. 26-30 each illustrate its detailed operation.

FIG. 25 illustrates in a flowchart, a basic operation of the battery pack 100. The state of each control section in a standby mode at step S001 will be described below. The module controller 122 is placed in a standby mode in preparation for entry into the next step, while being powered by the battery cells 120 within the battery module 112. Both the FET 129 and the FET 130 of the battery module 112 are each in an OFF state. The main controller 134 is placed in a standby mode in preparation for entry into the next step, while being powered by an electricity storage such as a backup capacitor which is a part of the power supply circuit 133 with a battery backup function, because the main controller 134 cannot be powered by the battery module 112. The FETs of the discharge control section 140 and the SCR of the charge control section 141 under the control of the main controller 134 are also each in an OFF state.

At step S002, if any one of the electrical cord 280, the electrical cord adapter 250, the cordless power tool 200, and the outlet plug 301 of the AC power tool 300 is electrically connected with the battery pack 100, then the process proceeds to step S004.

At step S003, if the standby mode at step S001 continues for a long term, then it enters a long-term storage (preservation) mode at step S101. Because the state of charge (remaining capacity) of the electricity storage such as a backup capacitor which is a part of the power supply circuit 133 with a battery backup function, becomes zero after continuation of the long-term storage mode, the main-controller 134 is turned OFF. In addition, although the state of charge (remaining capacity) of the battery cells 120 within the battery module 112 is relatively larger than that of the electricity storage, the module controller 122 waits while consuming a very small current smaller than a current consumed in a normal operation, to prevent the deterioration of the battery cell electrodes or the like due to overdischarging. The long-term storage mode at step S101 continues until the inlet 108 is electrically connected and the charging begins at step S004.

At step S004, if either the power-supply terminal 282 of the electrical cord 280 or the power-supply terminal 257 of the electrical cord adapter 250 is electrically connected with the battery pack 100, then the process first proceeds to a charge preparation mode for an operation prior to the charging at step S201 and then proceeds to a charge mode at step S301. After the charging begins, if it becomes necessary to stop the charging at step S302, then the process returns to the standby mode at step S001.

At step S005, if either the power-input terminal 208 of the cordless power tool 200 or the outlet plug 301 of the AC power tool 300 is electrically connected with the battery pack 100, then the process first proceeds to a discharge preparation mode prior to discharging at step S401 and then proceeds to a discharge mode at step S501. After the discharging begins, if it becomes necessary to stop the discharging at step S502, then the process returns to the standby mode at step S001.

FIG. 26 illustrates in a flowchart, the long-term storage mode of the battery pack 100. At step S102, if either the power-supply terminal 282 of the electrical cord 280 or the power-supply terminal 257 of the electrical cord adapter 250 is electrically connected with the battery pack 100, then the power supply circuit 133 with a battery backup function is activated by power supply through a diode 142 which is disposed within the battery pack 100 for detecting the inlet for charging. At step S103, along with the activation of the power supply circuit 133 with a battery backup function, the main controller 134 is activated, and step S104 is followed to start charging of the electricity storage such as a backup capacitor which is a part of the power supply circuit 133 with a battery backup function. At step S105, the main controller 134 starts digital communications with the module controllers 122 through the main-controller digital-communication portion 139 and the module-controller digital-communication portions 132. At step S106, the module controller 122 is activated in response to the starting of the digital communications, and the process enters the charge preparation mode at step S201.

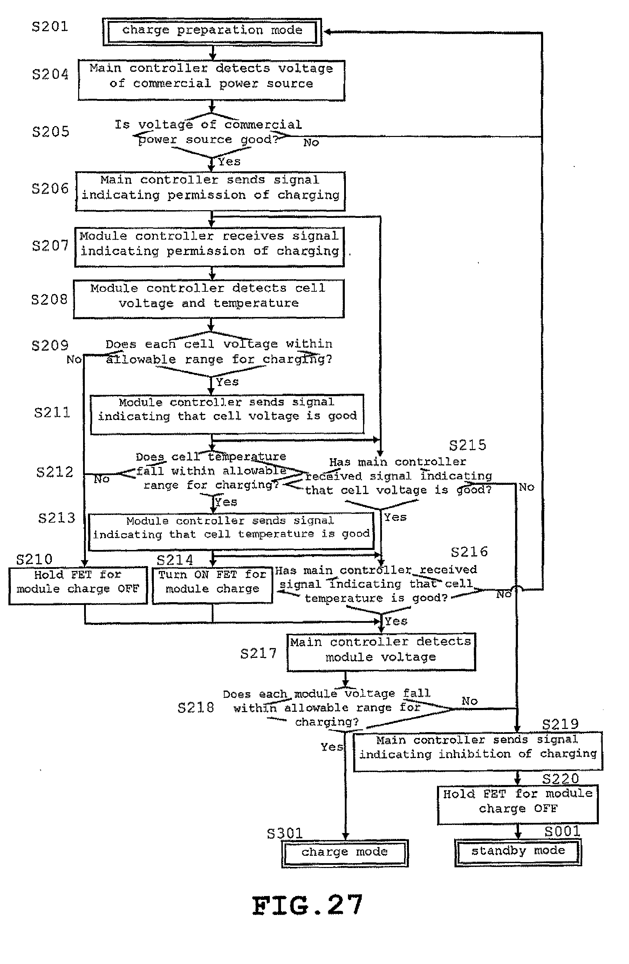

FIG. 27 illustrates in a flowchart, operations in the charge preparation mode of the battery pack 100. At step S204, the main controller 134 detects the input voltage of the commercial power source. At the step S205, if the detected voltage of the commercial power source falls within an allowable range for charging, then the process proceeds to step S206. If, however, the detected voltage of the commercial power source falls outside the allowable range for charging, then the process returns to the step S201 to protect the circuits within the battery pack 100 from failure due to abnormal voltage input. At step S206, the main controller 134 sends to the module controllers 122 instruction signals each of which indicates that charging is permitted. At step S207, the module controllers 122 receive the instruction signals.

At step S208, each of the module controllers 122 detects the voltage and temperature of each of the battery cells 120. At step S209, each of the module controllers 122 determines that the charging is not permitted, if at least one (1) of the battery cells 120 within the battery module 112, because it has been fully charged, has a voltage not lower than a predetermined voltage, if the monitor wires 123 are broken, or if the voltages of the battery cells 120, because of their failure or the like, have mutual differences not smaller than a predetermined value. Step S210 follows to hold the FET 129 in an OFF state. At step S209, if, however, each of the module controllers 122 determines that all the battery cells 120, because they have not been fully charged, have their voltages lower than the predetermined voltage, with the differences between the voltages of the battery cells 120 smaller than the predetermined value, then the process proceeds to step S211 to allow each of the module controllers 122 to send o the main controller 134 an information signal indicating that the battery cells 120 have voltages which permit the charging.

At step S212, if each of the module controllers 122 determines that the battery cells 120 have temperatures falling outside a predetermined range to permit charging, like lower temperatures or higher temperatures which can adversely affect the cycle life of each of the battery cells 120, then the process proceeds to step S210. If, however, each of the module controllers 122 determines that the battery cells 120 have temperatures within the predetermined range to permit charging, then the process proceeds to step S213 to allow each of the module controllers 122 to send to the main controller 134 an information signal indicating that the battery cells 120 have temperatures which permit the charging. Step S214 follows to turn the FET 129 ON.

On the other hand, the main controller 134 is configured to send, at step S206, to the module controllers 122 instruction signals each of which indicates that the charging is permitted, and to wait, at step S215, for reception of information signals from the module controllers 122, wherein each of the information signals indicates that the battery cells 120 have voltages which permit the charging. If the main controller 134 receives the information signals from all of the three (3) module controllers 122, then the process proceeds to step S216. If, however, the main controller 134 does not receive any information signal from at least one of the three (3) module controllers 122, then the process proceeds to step S219.

The main controller 134 is configured to wait, at step S216, for reception of information signals from the module controllers 122, wherein each of the information signals indicates that the battery cells 120 have a temperature which permits the charging. If the main controller 134 receives the information signals from all of the three (3) module controllers 122, then the process proceeds to step S217. If, however, the main controller 134 does not receive any information signal from at least one of the three (3) module controllers 122, then the process returns to an initial process step in the charge preparation mode at step S201. When the process returns to the initial process step, step S215 has been implemented to determine that the battery cells 120 have voltages which permit the charging. For this reason, in an example in which the battery pack 100 that is hot just after discharging is left in an atmosphere at a room temperature, the process is repeated in a manner that the process returns from step S216 to step S210 and then returns to step S216, until the battery cell temperature is brought into a temperature range to permit charging, and, if the battery cell temperature is brought into the temperature range to permit charging, then the process proceeds to step S217.

At step S217, the main controller 134 detects individual battery module voltages of the three (3) battery modules 112. At step S218, the main controller 134 determines that the charging is not permitted, if at least one of the three (3) battery modules 112 has a module voltage not lower than a predetermined voltage because the battery module 112 has been fully charged, or if the module voltages of the battery modules 112 have mutual differences not smaller than a predetermined value because of failure of the battery modules 112 or the like. Step S219 follows to send an instruction signal indicating that the charging is not permitted, from the main controller 134 to each of the module controllers 122. Further, step S220 follows to allow the module controllers 122 to turn the FETs 129 OFF, and the process enters the standby mode at step S001. At step S218, if, however, it is detected that all the battery modules 112 have module voltages lower than the predetermined voltage and the module voltages of the battery modules 112 have mutual differences smaller than the predetermined value, then the process proceeds to the charge mode at step S301.

A hypothetical case is considered where, in the charge preparation mode as shown in FIG. 27, one of the three (3) battery modules 112 is situated such that at least one of its battery cells 120 has an abnormal voltage; where the module controller 122 which corresponds to the one battery module 112 has suffered from a failure and, at step S209, makes a false determination that the battery cell voltage falls within an allowable range for charging; and where the module controller 122, at step S211, sends to the main controller 134 a false information signal indicating that the battery cell voltage is permitted to be charged. In this hypothetical case, thereafter, the main controller 134, at step S217, detects the battery module voltage per each battery module 112, which is followed by step S218 to determine that the battery module voltage of the one battery module 112, which includes at least one battery cell 120 having an abnormal voltage, falls outside the allowable range for charging, or otherwise step S218 follows to determine that the one battery module 112 is different in voltage from the remaining battery modules 112, that is, all the battery modules 112 have mutual significant differences, resulting in entry into step S219 and its subsequent steps, in any case. As a result, the main controller 134, because of its own rejection to enter the charge mode, turns off the SCR of the charge control section 141, and also, the module controller 122, upon reception of an instruction signal indicating that the charging is not permitted, from the main controller 134, turns off the FET 129. The above-described process can provide fault tolerance for a false determination by any one of the battery modules 112.

Another hypothetical case is also considered where the module controller 122, after making the above-described false determination, receives the instruction signal to indicate rejection of charging from the main controller 134; and where the module controller 122 has a cumulative failure and so has failed to tern off the FET 129, even in an attempt to do so, because the FET 129 has been short-circuited. Even in this case, the module controllers 122 which correspond to the remaining normal-operating two (2) battery modules 112, receive the instruction signal to indicate rejection of charging from the main controller 134, and the these normal module controllers 122 turn off their respective FETs 129, resulting in the achievement of the fault tolerance.

Still another hypothetical case is also considered where the main control assembly 114 has suffered from a failure and so has failed to stop charging. Even in this case, the three (3) module controllers 122 detect, through their separate operations, either the states of their respective battery modules 112 being charged, or the states of the digital-communications with the main controller 134, with the common result that the main controller 134, because of its own decision, is able to stop charging.

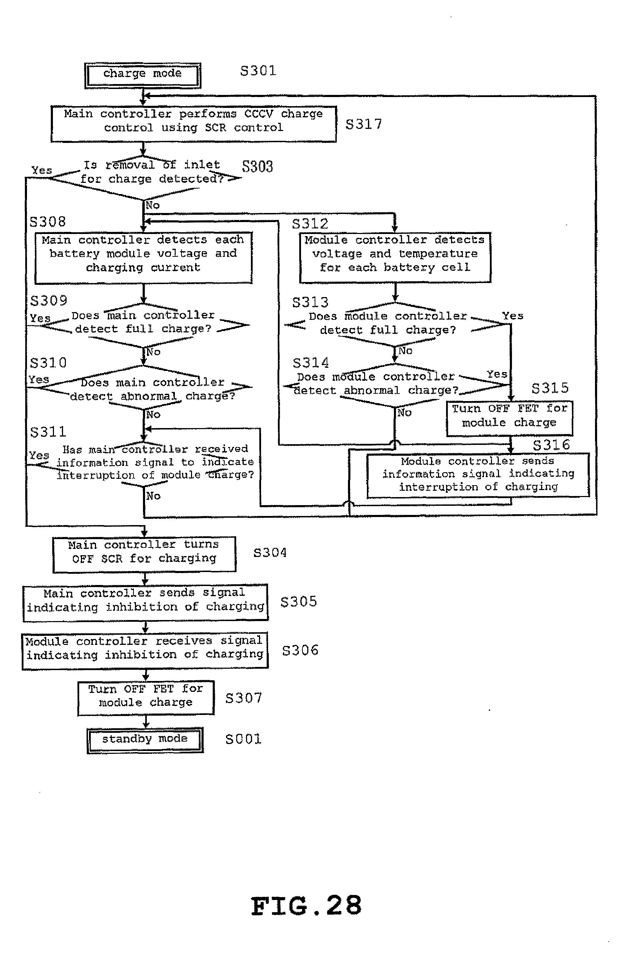

FIG. 28 illustrates in a flowchart, the charge mode of the battery pack 100. As shown in FIG. 28, at step S317, typical CCCV charge control (Constant-Current, Constant-Voltage method) is performed for the Li-ion battery cells 120. That is, the CCCV charge control is a method for controlling the charging voltage and the charging current such that the charging current does not exceed an upper limit of current, until the Li-ion battery voltage reaches a predetermined voltage, and such that the Li-ion battery voltage, after having reached a predetermined voltage, is maintained at the same voltage.

As shown in FIG. 28, at step S303, if it is detected that the inlet 108 has been removed while being charged, then step S304 is implemented to cause the main controller 134 to turn off the SCR of the charge control section 141, step S305 follows to cause the main controller 134 to send to the module controllers 122, an instruction signal indicating that the charging is not permitted, step S306 follows to allow the module controller 122 to receive the instruction signal, and step S307 follows to turn off the FETs 129, resulting in entry into the standby mode at step S001. On the other hand, at step S303, if the charge is performed without removal of the inlet 108, then the process proceeds to step S308 implemented by the main controller 134 and step S312 implemented by the module controllers 122.

At step S308, the main controller 134 detects the battery module voltage and the charging current of each battery module 112. At step S309, if the main controller 134 determines that each battery module 112 has been fully charged, as a result of detection of a state that the battery module voltage is not lower than a predetermined voltage, or otherwise a state that the charging current is not higher than a predetermined current at a nearby end of the termination of the CCCV charge control (constant-voltage charge control), then the process proceeds to step S304 and its subsequent steps to stop charging. At step S310, if there is detected one of a state that the charging current is over-current, a state that there is no passage of current, a state that a selected one of the charging voltage and the charging current cannot be controlled to reach a target value because of the voltage fluctuations of the commercial power source, or a state that the module voltages of the battery modules 112 have mutual differences not smaller than a predetermined value, then the process proceeds to step S304 and its subsequent steps to stop charging. At step S311, if the main controller 134 receives an information signal indicating that each module controller 122 has turned off the FET 129, then the process proceeds to step S304 and its subsequent steps to stop charging.

At step S312, each module controller 122 detects the voltage and the temperature of each battery cell 120. At step S313, if each module controller 122 determines that the corresponding battery module 112 has been fully charged, as a result of detection of a state that at least one (1) of the battery cells 120 within each battery module 112 has a voltage higher than a predetermined voltage, then, at step S315, the FET 129 is turned off, and, at step S316, each module controller 122 sends to the main controller 134, an information signal indicating that the charging is interrupted by each battery module 112 on its side. At step S314, if each module controller 122 detects one of a state that the battery cell temperature exceeds an allowable range for charging, a state that a rise in the temperature of the battery cells 120 is not lower than a predetermined value, a state that the voltages of the battery cells 120 have mutual differences not smaller than a predetermined value, or a state that the battery monitor wires 123 have been broken, then the process proceeds to step S315. At step S315, if the FET 129 is turned off, then, at step S308, the main controller 134 determines again that the voltage is indicating that the charging is interrupted by each battery module 112 on its side. Subsequently, at step S316, the information signal indicating that the charging has been interrupted is sent to the main controller 134, which is followed by step S311 to cause the main controller 134 to make a cumulative determination, and the process proceeds to step S304 and its subsequent steps to stop charging.

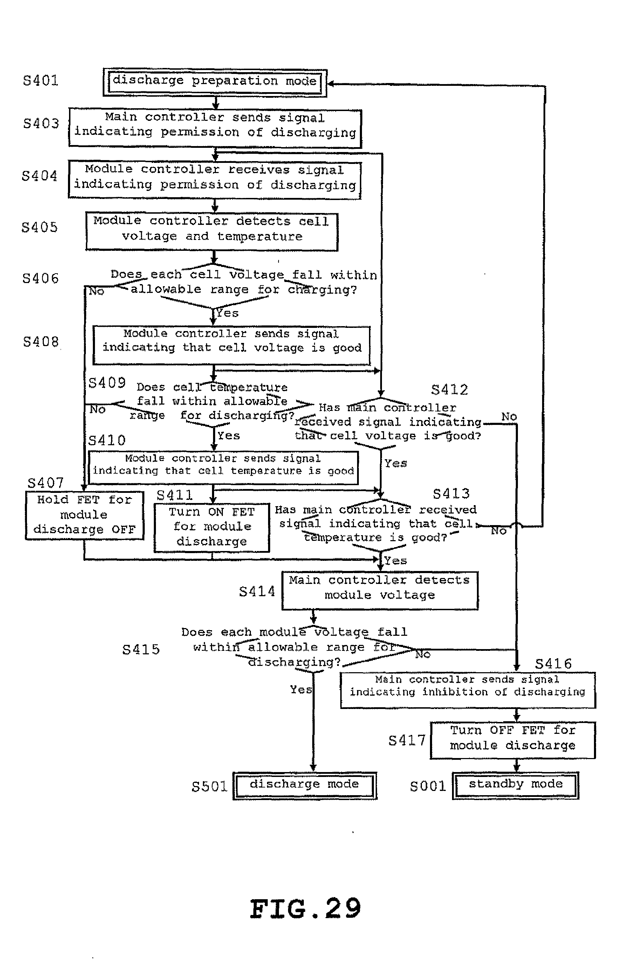

FIG. 29 illustrates in a flowchart, operations in the discharge preparation mode of the battery pack 100. At step S403, the main controller 134 sends to the module controllers 122, an instruction signal indicating that the discharging is permitted. It is added that, when the process proceeds to step S403 while the long-term storage mode at step S101 is being taken, the process does not proceed to any subsequent steps because the main controller 134 is not activated. Accordingly, this prevents the battery cells 120 which have become empty as a result of a long-term storage, from being further overdischarged. At step S404, the module controllers 122 receive the instruction signals. At step S405, each module controller 122 detects the voltage and the temperature of each battery cell 120. At step S406, each module controller 122 determines that the discharging is not permitted, if at least one of the battery cells 120 has a voltage lower than a predetermined voltage which indicates that the at least one battery cell 120 has been overdischarged, if the voltage monitor wires 123 are broken, or if the voltages of the battery cells 120, because of their failure or the like, have mutual differences not smaller than a predetermined value. Step S407 follows to hold the FETs 130 in an OFF state. If, however, each module controller 122 determines that every one of all the battery cells 120 within the battery module 112 has a voltage not lower than a predetermined voltage indicating that each battery cell has not been discharged, with the differences between the voltages of the battery cells 120 smaller than a predetermined value, then the process proceeds to step S408 to allow each module controller 122 to send to the main controller 134, an information signal indicating that the battery cells 120 have voltages at which the discharging is permitted.

At step S409, if each module controller 122 determines that the battery cells 120 have temperatures outside a predetermined range within which the discharging is permitted, such as a range of lower temperatures or higher temperatures within which the life cycle of each battery cell 120 can be damaged, then the process proceeds to step S407. If, however, each module controller 122 determines that the battery cells 120 have temperatures within the predetermined range to permit discharging, then the process proceeds to step S410 to allow each module controller 122 to send to the main controller 134 an information signal indicating that the battery cells 120 have temperatures at which the discharging is permitted, which is followed by step S411 to turn on the FETs 130.

On the other hand, the main controller 134 is configured to send, at step S403, to the module controllers 122 instruction signals each of which indicates that the discharging is permitted, and to wait, at step S412, for reception of information signals from the module controllers 122, wherein each of the information signals indicates that the battery cells 120 have voltages at which the discharging is permitted. If the main controller 134 receives the information signals from all of the three (3) module controllers 122, then the process proceeds to step S413. If, however, the main controller 134 receives no information signal from at least one of the three (3) module controllers 122, then the process proceeds to step S416.

The main controller 134 is configured to wait, at step S413, for reception of information signals from the module controllers 122, wherein each of the information signals indicates that the battery cells have temperatures at which the discharging is permitted. If the main controller 134 receives the information signals from all of the three (3) module controllers 122, then the process proceeds to step S414. If, however, the main controller 134 receives no information signal from at least one of the three (3) module controllers 122, then the process returns to the initial process step in the discharge preparation mode at step S401. At a time when the process returns to the initial process step, step S412 has been implemented to determine that the battery cells 120 have voltages at which the discharging is permitted. For this reason, in an example in which the battery pack 100 is left outside at high temperatures and therefore becomes too hot to permit the discharging, and then the battery pack 100 is left within a room at room temperatures, the process is repeated in a manner that the process returns from step S413 to step S401 and then returns to step S413, just until the battery cell temperature has fallen down into a temperature range within which the discharging is permitted, and, if the battery cell temperature has fallen down into the temperature range to permit discharging, then the process proceeds to step S414.

At step S414, the main controller 134 detects individual battery module voltages of the three (3) battery modules 112. At step S414, the main controller 134 determines that the discharging is not permitted, if at least one of the battery modules 112 has a module voltage not higher than a predetermined value which indicates that each battery module 112 has been overdischarged, or if the module voltages of the battery modules 112 have mutual differences not smaller than a predetermined value because of failure of the battery modules 112 or the like. Step S416 follows to send an instruction signal indicating that the discharging is not permitted, from the main controller 134 to each module controller 122. Further, step S417 follows to allow the module controllers 122 to turn off the FETs 130, and the process enters the standby mode at step S001. If, however, it is detected that all the battery modules 112 have module voltages not lower than a predetermined value which indicates that each battery module 112 has not been overdischarged and the module voltage of the battery modules 112 have mutual differences smaller than the predetermined value, then the process proceeds to the discharge mode at step S501.

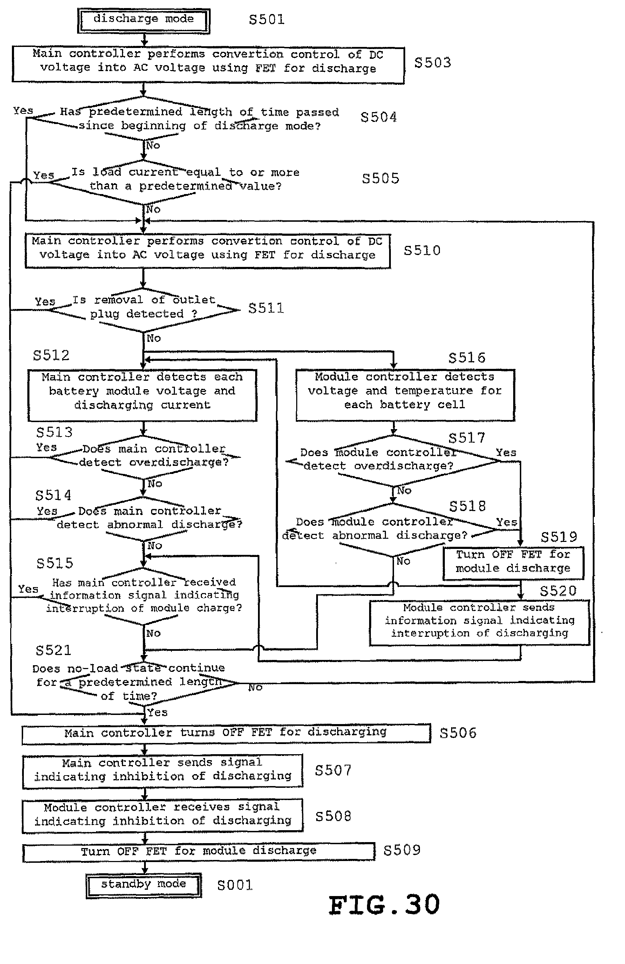

FIG. 30 illustrates in a flowchart, operations in the discharge mode of the battery pack 100. At step S503, the main controller 134 allows the discharge control section 140 to covert DC voltage into AC voltage which is equivalent to the effective value of the commercial power source. At steps S504 and S505, if a load current which is equal to or more than a predetermined current is detected within a predetermined length of time since the beginning of the discharge mode, then the process proceeds to step S506 and its subsequent steps to stop discharging. For example, for a grinder as an exemplary AC power tool, which has a switch of a toggle type, if the outlet plug is inserted into the battery pack 100 with the switch held ON, the blade is prevented from being unexpectedly activated.

Step S506 and its subsequent steps are process steps to stop the discharging. More specifically, at step S506, the main controller 134 turns off the FETs of the discharge control section 140. At step S507, the main controller 134 sends to the module controllers 122 instruction signals each of which indicates that discharging is not permitted. At step S507, the main controller 134 sends to the module controllers 122 instruction signals each of which indicates that discharging is not permitted. At step S508, the module controllers 122 receive the instruction signals each of which indicates that discharging is not permitted. Step S509 follows to allow the module controllers 122 to turn off the FET 130, and the process enters the standby mode at step S001.

If, at steps S504 and S505, it is determined that flow of current of not less than a predetermined value does not exist within a predetermined time since the beginning of the discharge mode, then the main controller 134, at step S510, allows the discharge control section 140 to convert DC voltage into AC voltage having the same level as the effective value of the commercial power source. As indicated at step S511, if removal of the outlet plug is detected during discharging, then the process proceeds to step S506 and its subsequent steps to stop discharging. On the other hand, if the discharge is performed without removal of the outlet plug, then the process proceeds to both step S512 which is implemented by the main controller 134, and step S516 which is implemented by the module controllers 122.

At step S512, the main controller 134 detects the battery module voltage and the discharging current of each battery module 112. If, at step S513, the main controller 134 detects one of a state in which the battery module voltage of at least one of the three (3) battery modules 112 has become lower than a predetermined voltage due to overdischarging, and a state in which the module voltages of the battery modules 112 have mutual differences not smaller than a predetermined value, then the process proceeds to step S506 and its subsequent steps to stop discharging. If, at step S514, the main controller 134 detects that the discharging current has become not lower than a predetermined value due to overload, then the process proceeds to step S506 and its subsequent steps to stop discharging. If, at step S515, the main controller 134 receives an information signal that each module controller122 has turned off the FETs 130, then the process proceeds to step S506 and its subsequent steps to stop discharging.

If, at step S521, a non-discharge state with the outlet plug not removed continues for a period not shorter than a predetermined time, then the process proceeds to step S506 and its subsequent steps to stop discharging. As a result, for example, when the cordless power tool 200 is electrically connected with the battery pack 100, and is left unused for a long time, the battery pack 100 enters the standby mode, to thereby block the discharging path and provide electrical isolation.

At step S516, each module controller 122 detects the voltage and the temperature of each battery cell 120. If, at step S517, each module controller 122 detects one of a state in which at least one of the battery cells 120 within each battery module 112 has a voltage lower than a predetermined voltage due to overdischarge, and a state in which the voltage monitor wires 123 are broken, then, at step S519, the FETs 130 are turned off, and, at step S520, each module controller 122 sends to the main controller 134, an information signal indicating that the discharging is interrupted by each battery module 112 on its side. If, at step S518, each module controller 122 detects one of a state in which the battery cell temperature exceeds an allowable range for discharging, a state in which a temperature rise per unit time of the battery cells 120 is not lower than a predetermined value, and a state in which the voltages of the battery cells 120 have mutual differences not smaller than a predetermined value, then the process proceeds to step S519. After step S519, is executed to turn off the FETs 130, step S512 is repeated to determine whether it is at a voltage at which the discharging is interrupted by each battery module 112 on its side, and also step S520 is executed to send an information signal indicating interruption of the discharging to the main controller 134, which is followed by step S515 for repeated determination, and the process proceeds to step S506 and its subsequent steps to stop discharging.

While several embodiments of the present invention have been described above in detail with reference to the drawings, they are just exemplified, and the present invention may be embodied in alternative modes, which begin with the modes described in the section titled "Disclosure of the Invention," and which are obtained by making various modifications and improvements to the above-described embodiments, in view of the knowledge of those skilled in the art.

## Claims

1. A battery pack usable as a power source for an electric device, comprising:
a battery cell group in which a plurality of battery cells are electrically interconnected in series;
discharge control circuitry configured to control discharging of the battery cell group;
discharge output terminals through which electric output of the discharge control circuitry is supplied to the electric device; and
a case that houses the battery cell group, the discharge control circuitry and the discharge output terminals,
wherein the battery cell group constitutes a battery module, in combination with input/output terminals electrically connected with the battery cell group,
the battery module is electrically connected with at least one other battery module in series, to thereby constitute a battery module group,
the battery module group is electrically connected with the discharge control circuitry, and
the battery cell modules contain module control circuitry,
the module control circuitry comprising:
a first detector configured to detect at least one of a voltage level, a current level and a temperature level, for at least one of the battery cells within the battery cell group; and
a first selector configured to select one of a state for allowing outputting of a direct current voltage to the input/output terminals, and a state for interrupting the outputting, based on a detection result from the first detector,
wherein the discharge control circuitry is further configured to transmit a first signal to the module control circuitry, when the discharge control circuitry interrupts outputting of a selected one of direct current voltage and alternating current voltage to the discharge output terminals, the first signal being indicative of interruption of the outputting,
the module control circuitry is configured to transmit a second signal to the discharge control circuitry, when the module control circuitry interrupts the outputting of the direct current voltage to the input/output terminals, the second signal being indicative of interruption of the outputting,
the discharge control circuitry is still further configured to interrupt the outputting of the selected one of direct current voltage and alternating current voltage to the discharge output terminals, in response to reception of the second signal from the module control circuitry which is provided to at least one of a plurality of battery modules within the battery module group, and
the module control circuitry is still further configured to interrupt the outputting of the direct current voltage to the input/output terminals, in response to reception of the first signal from the discharge control circuitry.

2. The battery pack according to claim 1, wherein the discharge control circuitry comprises:
a second detector configured to detect at least one of a voltage level, a current level and a temperature level, for at least one of the battery modules within the battery module group; and
a second selector configured to select one of a state for allowing outputting of the selected one of direct current voltage and alternating current voltage to the discharge output terminals, and a state for terminating the outputting, based on a detection result from the second detector.

3. A battery pack usable as a power source for an electric device, comprising:
a battery cell group in which a plurality of battery cells are electrically interconnected in series;
conversion circuitry configured to convert alternating current voltage of a common power source to direct current voltage;
charge control circuitry configured to control the direct current voltage;
charging terminals through which electricity is supplied from the common power source to the battery cell group; and
a case that houses the battery cell group, the conversion circuitry, the charge control circuitry and the charging terminals,
wherein the battery cell group constitutes a battery module, in combination with input/output terminals electrically connected with the battery cell group,
the battery module is electrically connected with at least one other battery module in series, to thereby constitute a battery module group,
the battery module group is electrically connected with the charge control circuitry, and
the battery cell modules contain module control circuitry,
the module control circuitry comprising:
a third detector configured to detect at least one of a voltage level, a current level and a temperature level, for at least one of the battery cells within the battery cell group; and
a third selector configured to select one of a state for allowing inputting of the direct current voltage to the battery cell group, and a state for interrupting the inputting, based on a detection result from the third detector,
wherein the charge control circuitry is further configured to transmit a third signal to the module control circuitry, when the charge control circuitry interrupts inputting of the direct current voltage to the battery module group, the third signal being indicative of interruption of the inputting,
the module control circuitry is configured to transmit a fourth signal to the charge control circuitry, when the module control circuitry interrupts the inputting of the direct current voltage to the battery cell group, the fourth signal being indicative of interruption of the inputting,
the charge control circuitry is still further configured to interrupt the inputting of the direct current voltage to the battery module group, in response to reception of the fourth signal from the module control circuitry which is provided to at least one of a plurality of battery modules within the battery module group, and
the module control circuitry is still further configured to interrupt the inputting of the direct current voltage to the battery cell group, in response to reception of the third signal from the charge control circuitry.

4. The battery pack according to claim 3, wherein the charge control circuitry comprises:
a fourth detector configured to detect at least one of a voltage level, a current level and a temperature level, for at least one of the battery modules within the battery module group; and
a fourth selector configured to select one of a state for allowing inputting of the direct current voltage to the battery module group, and a state for interrupting the inputting, based on a detection result from the fourth detector.

5. The battery pack according to claim 1, wherein the discharge control circuitry outputs alternating current voltage having an effective value which includes an effective value of a commercial power source, and
the discharge control circuitry outputs the alternating current voltage having a frequency which includes a frequency of the commercial power source,

6. The battery pack according to claim 5, wherein the discharge output terminals are configured to allow an outlet plug for power input into the electric device which is powered by the commercial power source, to be inserted into the discharge output terminals.

7. The battery pack according to claim 3, wherein the discharge control circuitry outputs alternating current voltage having an effective value which includes an effective value of a commercial power source, and
the discharge control circuitry outputs the alternating current voltage having a frequency which includes a frequency of the commercial power source,

8. The battery pack according to claim 7, wherein the discharge output terminals are configured to allow an outlet plug for power input into the electric device which is powered by the commercial power source, to be inserted into the discharge output terminals.

9. The battery pack according to claim 1, wherein the battery cell group outputs a voltage of above 36 V.

10. The battery pack according to claim 1, wherein the battery pack outputs a voltage of 100 V or higher through the discharge output terminals.

11. The battery pack according to claim 1, wherein each battery cell is generally cylindrical, with a diameter in a range of approximately 16 mm and approximately 18 mm, and a height in a range of approximately 20 mm to approximately 30 mm.

12. The battery pack according to claim 3, wherein the battery cell group outputs a voltage of above 36 V.

13. The battery pack according to claim 3, wherein the battery pack outputs a voltage of 100 V or higher through the discharge output terminals.

14. The battery pack according to claim 3, wherein each battery cell is generally cylindrical, with a diameter in a range of approximately 16 mm and approximately 18 mm, and a height in a range of approximately 20 mm to approximately 30 mm.
